# EUROPÄISCHE PATENTSCHRIFT

(11) **EP 2 473 458 B1**
(45) Veröffentlichungstag und Bekanntmachung des Hinweises auf die Patenterteilung: **10.10.2018**
(21) Anmeldenummer: 10751879.7
(22) Anmeldetag: 24.08.2010
(51) Int. Cl.: C04B 26/02, C04B 28/02, C04B 28/06, C04B 28/14, C08L 21/00

(54) **BITUMENFREIE BAUSTOFFZUSAMMENSETZUNG**
BITUMEN-FREE CONSTRUCTION MATERIAL COMPOSITION
COMPOSITION DE MATÉRIAU DE CONSTRUCTION EXEMPTE DE BITUME

(30) Priorität: 04.09.2009 DE 102009029214; 05.02.2010 DE 102010001617
(43) Veröffentlichungstag der Anmeldung: 11.07.2012
(73) Patentinhaber: Henkel AG & Co. KGaA, 40589 Düsseldorf (DE)
(72) Erfinder: WENDTLAND, Anke, 59457 Werl (DE); JESKE-MARQUARDT, Maren, 59510 Lippetal (DE); SCHÖTTELDREIER, Martin, 59872 Meschede (DE)
(86) Internationale Anmeldenummer: PCT/EP2010/062279
(87) Internationale Veröffentlichungsnummer: WO 2011/026757

(56) Entgegenhaltungen:
- WO-A1-2007/054148
- DE-A1- 10 150 601
- DE-U1-202005 015 351
- JP-A- 7 315 955

## Beschreibung

Die vorliegende Erfindung betrifft eine bitumenfreie Baustoffzusammensetzung, insbesondere eine Abdichtungsmasse (Dichtmasse), sowie deren Verwendung, insbesondere zu Zwecken der Bauwerksabdichtung, sowie ein entsprechendes Verfahren zum Schutz bzw. zur Abdichtung von Bauwerken oder Bauteilen unter Verwendung einer solchen Baustoffzusammensetzung.

Im Rahmen der Bauwerksabdichtung, insbesondere zum Abdichten und zum Schutz von erdberührten Bauwerken und Bauteilen, wie Kelleraußenwänden, feuchten Räumen, Stützmauern und dergleichen, aber auch zu Zwecken der Dachabdichtung, können grundsätzlich unterschiedliche Abdichtungssysteme zum Einsatz kommen, nämlich einerseits bitumenhaltige Massen und Bahnsysteme und andererseits zementäre Systeme bzw. mineralische Dichtungsschlämmen. Daneben existieren noch Abdichtungssysteme auf Basis von kunststoffmodifizierten Bitumendickbeschichtungen (KMB), welche sozusagen eine "Zwitterform" bilden und folglich eine gewisse Zwischenstellung einnehmen.

Die Anforderungen, welche die verschiedenen zuvor genannten Abdichtungssysteme im Hinblick auf die Bauwerksabdichtung erfüllen müssen, sind durch verschiedene Normen und Richtlinien festgelegt, so z. B. in der DIN 18195, "Bauwerksabdichtungen", Teil 1 bis 10 (Teil 1, 3 bis 6: Ausgabe August 2000; Teil 2: Ausgabe April 2009; Teil 7: Ausgabe Juli 2009; Teile 8 bis 10: Ausgabe März 2004), DIN 18195-100 (Entwurf, Juni 2003) und DIN 18195-101 (Entwurf, September 2005), in der Richtlinie für die Planung und Ausführung von Abdichtungen erdberührter Bauteile mit flexiblen Dichtungsschlämmen (1. Ausgabe, Stand: Januar 1999), in der Richtlinie für die Planung und Ausführung von Abdichtungen von Bauteilen mit mineralischen Dichtungsschlämmen (1. Ausgabe, Stand: Mai 2002) und in der Richtlinie für die Planung und Ausführung von Abdichtungen mit kunststoffmodifizierten Bitumendickbeschichtungen (KMB) (2. Ausgabe, Stand: November 2001).

Zementäre Systeme bzw. mineralische Dichtungsschlämmen besitzen zwar den Vorteil der Umweltfreundlichkeit, sind aber nur schlecht dickschichtig verarbeitbar bzw. auftragbar, so dass sie sich nicht zum dickschichtigen Auftrag an senkrechten Flächen, wie Wänden, eignen. Folglich kommen in der Bauwerksabdichtung, und zwar sowohl zur Abdichtung und zum Schutz von erdberührten Bauwerken und Bauteilen, wie Kelleraußenwänden, feuchten Räumen, Stützmauern und dergleichen, als auch bei der Dachabdichtung, derzeit vorrangig bitumenhaltige Abdichtungen, beispielsweise auf Basis von Bitumendickbeschichtungen oder, insbesondere im Fall von Dachabdichtungen, auch auf Basis von Bitumenbahnen, zum Einsatz.

Die entsprechenden Bitumendickbeschichtungen des Standes der Technik können dabei grundsätzlich in ein- oder zweikomponentiger Form zum Einsatz kommen. Einkomponentige Bitumendickbeschichtungen härten oder verfilmen rein physikalisch durch Verdunsten von Wasser bzw. Lösemitteln, während zweikomponentige Bitumendickbeschichtungen üblicherweise aus einer Basiskomponente auf Basis einer im allgemeinen ionischen Bitumenemulsion und einer Härterkomponente bestehen, wobei als Härterkomponente zumeist eine Mischung aus Füllstoffen, wie z. B. Quarzsand und Portlandzement und/oder Calciumaluminatzement, eingesetzt werden kann.

Der Einsatz von Bitumen ist zwar relativ kostengünstig, jedoch wird Bitumen bereits jetzt in Dampf- und Aerosolform als krebserregend für den Menschen eingestuft, so dass die Möglichkeit besteht, dass Bitumen künftig auch als solches als karzinogen eingestuft werden könnte, was dem Einsatz von Bitumen zu Zwecken der Bauwerksabdichtung dann entgegenstehen würde. Zudem ist sauberes Arbeiten mit Bitumenprodukten nur schwer möglich. Geräte und andere Kontaktflächen, die mit den Bitumenprodukten in Berührung kommen, lassen sich schlecht reinigen.

Daher hat es im Stand der Technik bereits zahlreiche Bestrebungen gegeben, Abdichtungssysteme bereitzustellen, welche zumindest im Wesentlichen ohne Bitumen auskommen. Nachteil der meisten bitumenfreien Abdichtungsmassen des Standes der Technik ist, dass sie infolge des Einsatzes teurer Rohstoffe bzw. teurer Ausgangschemikalien insgesamt relativ kostenintensiv sind, was ihrer Anwendbarkeit im Baugewerbe oftmals entgegensteht. Die meisten Systeme weisen zudem einen sehr komplexen Chemismus auf, was in Bezug auf eine praxisgerechte Handhabung gleichermaßen nachteilig ist. Eine Vielzahl von bitumenfreien Abdichtungssystemen des Standes der Technik greift zudem auf reaktive Systeme zurück, welche in der Praxis die Handhabung erschweren. Zudem erfüllen die meisten bitumenfreien Abdichtungsmassen nicht die Leistungsfähigkeit der herkömmlichen Bitumenabdichtungsmassen.

Eine Reihe von bitumenfreien Abdichtungsmassen des Standes der Technik basiert auf Epoxidharzsystemen. Epoxidharze sind aber nicht nur vergleichsweise kostenintensiv und zudem potentiell umweltschädigend, sondern auch bei der Verarbeitung der Abdichtungsmasse relativ komplex in der Handhabung.

Die DE 44 16 570 A1 betrifft eine elastische Form- und/oder Dichtungsmasse aus rezykliertem Altgummimaterial und/oder Weichplastikteilen zur Verwendung als Nutzschichten, Schutzflächen, Verbundkörpern oder dergleichen. Die elastische Form- und/oder Dichtungsmasse besteht aus 0,1 bis 0,8 Teilen Gummigranulat unterschiedlicher Körnung bis höchstens 2 mm Durchmesser, welches mit etwa 0,9 bis 0,2 Teilen wasserlöslicher Acrylatdispersion einschließlich Additiven gebunden ist. Die Form- und/oder Dichtungsmasse muss vor ihrer Anwendung unter dynamisch wechselndem Druck bis 10 bar in kleinen Volumeneinheiten sequentiell verdichtet werden, was in bezug auf eine praxisnahe Anwendung abträglich ist.

Eine deutlich verbesserte bitumenfreie Abdichtungsmasse wird in der WO 2007/054148 A1 offenbart. Die Abdichtungsmasse enthält neben einer Polymerdispersion oder einem entsprechenden Redispersionspulver Polystyrolpartikel, keramische Mikrohohlkugeln und synthetische Mikrohohlkugeln auf Basis organischer Polymere und gegebenenfalls mindestens ein Bindemittel. Die Abdichtungsmassen zeichnen sich durch ausgezeichnete Abdichtungseigenschaften und insbesondere eine sehr geringe Schrumpfung bei der Trocknung und Aushärtung aus. Dadurch kommt es nach dem Aufbringen der Abdichtungsmassen weder zu Rissbildung in der Abdichtungsschicht, noch zu unerwünschten Dimensionsveränderungen. Wie dem Ausführungsbeispiel der WO 2007/054148 A1 zu entnehmen ist, sind diese positiven Eigenschaften auf die Kombination der drei Bestandteile Polystyrolpartikel, keramische Mikrohohlkugeln und synthetische Mikrohohlkugeln auf Basis organischer Polymere zurückzuführen. Wird auf eine dieser drei Komponenten verzichtet, resultieren Dichtmassen mit nicht zufrieden stellenden Eigenschaften. Unabhängig davon, welcher Bestandteil weggelassen wurde, kam es zu einer Rissbildung infolge auftretender Schrumpfung beim Trocknen und Aushärten. Gerade der Einsatz keramischer Mikrohohlkugeln ist jedoch nicht unproblematisch. So besitzen diese nur eine begrenzte mechanische Stabilität. Sowohl bei der Einarbeitung der keramischen Mikrohohlkugeln in die Abdichtungsmasse, als auch beim Aufbringen der Abdichtungsmasse auf die zu beschichtende Fläche kann es zu einer teilweisen Zerstörung der keramischen Mikrohohlkugeln kommen. Es resultieren vergleichsweise scharfkantige Bruchstücke, die potentielle Bruchstellen in der ausgehärteten Abdichtungsschicht darstellen. Zudem ist die Verarbeitbarkeit der Abdichtungsmassen nicht optimal. Beim Auftragen der Dichtmasse führen die keramischen Mikrohohlkugeln bzw. deren Bruchstücke zu einem Kratzen, was die Ausbildung glatter Oberflächen erschwert. Ein weiterer Nachteil keramischer Mikrohohlkugeln besteht darin, dass diese oftmals Feuchtigkeit aus der Umgebung aufnehmen. Dies verschlechtert die Lagerbeständigkeit entsprechender Dichtungsmassen und kann sich auch negativ auf die Langzeitstabilität und Feuchtebeständigkeit von daraus hergestellten Dichtungsschichten auswirken.
Das der vorliegenden Erfindung zugrunde liegende Problem liegt somit in der Bereitstellung einer bitumenfreien Baustoffzusammensetzung, welche sich als Dichtmasse bzw. Abdichtungsmasse in der Bauwerksabdichtung eignet, wobei insbesondere einerseits ausgezeichnete Abdichtungseigenschaften und eine sehr geringe Schrumpfung bei der Trocknung und Aushärtung erreicht und andererseits die zuvor geschilderten Nachteile des Einsatzes keramischer Mikrohohlkugeln vermieden werden. Die Abdichtungsmassen bzw. daraus erhältliche Abdichtungsschichten sollen weiterhin insbesondere leicht verarbeitbar und spritzbar, sowie möglichst UV-beständig und witterungsstabil sein.
Es wurde nun überraschenderweise gefunden, dass sich bitumenfreie Baustoffzusammensetzungen mit hervorragenden Eigenschaften frei von keramischen Mikrohohlkugeln erhalten lassen, wenn diesen Teilchen aus vulkanisiertem Naturkautschuk, vulkanisiertem synthetischen Kautschuk, thermoplastischem Kautschuk oder Mischungen davon zugegeben werden.

Gegenstand der vorliegenden Erfindung ist somit eine bitumenfreie Baustoffzusammensetzung gemäß Anspruch 1, insbesondere eine Abdichtungsmasse, wobei die Baustoffzusammensetzung
- mindestens eine Polymerdispersion oder ein entsprechendes Redispersionspulver,
- Polystyrolpartikel,
- Teilchen aus vulkanisiertem Naturkautschuk, vulkanisiertem synthetischen Kautschuk, thermoplastischem Kautschuk oder Mischungen davon und
- auf Basis von organischen Polymeren ausgebildete synthetische Mikrohohlkugeln
enthält und frei ist von keramischen Mikrohohlkugeln.

Überraschenderweise führt eine Kombination der vorgenannten Inhaltsstoffe zu einer bitumenfreien Baustoffzusammensetzung, welche sich in hervorragender Weise für die Bauwerksabdichtung eignet und neben ausgezeichneten Abdichtungseigenschaften insbesondere ein ausgezeichnetes Schrumpfverhalten nach ihrem Auftrag dahingehend aufweist, dass zumindest im wesentlichen keine Schrumpfung bei der Trocknung und Aushärtung beobachtet wird. Dies wird nachfolgend noch ausgeführt.

Der Einsatz von Teilchen aus vulkanisiertem Naturkautschuk, vulkanisiertem synthetischen Kautschuk, thermoplastischem Kautschuk oder Mischungen davon trägt wesentlich zur leichten Verarbeitbarkeit der Baustoffzusammensetzung bei. Zudem wirkt er sich positiv auf die Witterungsstabilität und UV-Beständigkeit daraus hergestellter Beschichtungen aus. Die Baustoffzusammensetzungen lassen sich sehr leicht verarbeiten und können in der Regel maschinell, z.B. mittels entsprechender Spritzapparaturen, aufgetragen werden. Im Vergleich zu bitumenhaltigen Dichtmassen, lassen sich Geräte und andere Oberflächen, die bei der Verarbeitung mit der Baustoffzusammensetzung in Kontakt kommen, deutlich leichter reinigen.

Ein wesentlicher Bestandteil der erfindungsgemäßen Baustoffzusammensetzung ist eine Polymerdispersion oder ein entsprechendes Redispersionspulver. Der Begriff der Polymerdispersion ist eine Sammelbezeichnung für Dispersionen (Latices) von fein verteilten, natürlichen und/oder synthetischen Polymeren, üblicherweise in wässrigen, seltener nichtwässrigen Dispersionsmitteln. Für weitere Einzelheiten zu dem Begriff der Polymerdispersionen kann beispielsweise verwiesen werden auf Römpp Chemielexikon, 10. Auflage, Band 5, 1998, Georg Thieme Verlag, Stuttgart/New York, Seiten 3469/3470, Stichwort: "Polymerdispersionen", sowie auf die dort referierte Literatur.

Erfindungsgemäß bevorzugt kommt eine Polymerdispersion zum Einsatz. Grundsätzlich kann aber anstelle der Polymerdispersion auch ein entsprechendes redispergierbares, insbesondere wasserdispergierbares Dispersionspulver auf Basis derselben Polymeren zum Einsatz kommen, aus dem sich dann die Polymerdispersion durch Anmachen mit dem entsprechenden Dispergiermedium, vorzugsweise Wasser, erhalten lässt. Aus Gründen der Einfachheit ist zwar nachfolgend meist nur von den Polymerdispersionen die Rede, jedoch gelten sämtliche nachfolgenden Ausführungen, insbesondere im Hinblick auf die Charakterisierung dieser Polymerdispersionen, z. B. deren physikalische und chemische Eigenschaften, Parameter, Struktur, Zusammensetzung etc., selbstverständlich auch entsprechend für die jeweils korrespondierenden Redispersionspulver, auch wenn dies nicht explizit erwähnt ist. Derartige Redispersionspulver sind dem Fachmann als solche bekannt und zudem kommerziell erhältlich, z. B. von den Firmen Wacker, Celanese, Rhodia, Elotex, Dow Chemical, BASF, Vinavil, Unimex etc., so dass hier nicht auf weitere Einzelheiten zur Technologie der Redispersionspulver eingegangen zu werden braucht. Als Redispersionspulver werden erfindungsgemäß insbesondere solche auf Basis vorzugsweise wässrig redispergierbarer Emulsionspolymere eingesetzt.

Der Einsatz einer Polymerdispersion, vorzugsweise einer wässrigen Dispersion, hat gegenüber Redispersionspulvern - neben weiteren anderen Vorteilen, z. B. Preis, bessere Anmachbarkeit und Benetzbarkeit der übrigen Inhaltsstoffe etc. - insbesondere den entscheidenden Vorteil, dass die entsprechende Anmachwassermenge bereits vorgegeben werden kann, so dass Dosierfehler beim Anmachen entfallen.

Vorteilhafterweise handelt es sich bei der erfindungsgemäß eingesetzten Polymerdispersion um eine Kunststoffdispersion. Aufgrund der zuvor geschilderten Nachteile epoxidharzbasierter Systeme wird erfindungsgemäß bevorzugt eine nichtepoxidharzbasierte Polymerdispersion, vorzugsweise eine nichtepoxidharzbasierte Kunststoffdispersion, eingesetzt. Für die Einarbeitung der weiteren Inhaltsstoffe sowie für eine verbesserte Anwendung ist es vorteilhaft, wenn die erfindungsgemäß eingesetzte Polymerdispersion darüber hinaus ionisch modifiziert, vorzugsweise anionisch modifiziert, ist.

Erfindungsgemäß bevorzugt eingesetzte Polymerdispersionen sind als wässrig basiertes bzw. wässriges Dispersionssystem formuliert. Dabei ist es selbstverständlich möglich, dass das Dispersionssystem durch Mischen mindestens zweier verschiedener wässriger Polymerdispersionen erhalten wird.

Üblicherweise weisen die erfindungsgemäß eingesetzten Polymerdispersionen einen Feststoffgehalt nach DIN ISO 1625-D von 30 bis 75 Gew.-%, insbesondere 45 bis 70 Gew.-%, bevorzugt 55 bis 65 Gew.-%, bezogen auf die Polymerdispersion, auf.

Im allgemeinen weisen die Polymerpartikel der erfindungsgemäß eingesetzten Polymerdispersionen Teilchengrößen (Teilchendurchmesser), insbesondere mittlere Teilchengrößen, von 0,001 bis 5 µm, insbesondere 0,01 bis 3 µm, vorzugsweise 0,05 bis 2 µm, besonders bevorzugt 0,1 bis 1,0 µm, auf, wobei die Teilchengrößen mittels der Methode der dynamischen Laserlichtstreuung unter Verwendung des kommerziell erhältlichen Malvern Zetasizer ermittelt werden.

Erfindungsgemäß bevorzugte Polymerdispersionen weisen einen pH-Wert gemäß DIN ISO 976 von im allgemeinen 2,5 bis 10,5, besonders bevorzugt von 2,5 bis 9,0 auf. Darüber hinaus besitzen erfindungsgemäß bevorzugt eingesetzte Polymerdispersionen bei 23 °C eine Viskosität gemäß DIN ISO 2555 von 10 bis 2000 mPa·s, insbesondere 100 bis 2000 mPa·s. Weiterhin besitzen erfindungsgemäß bevorzugt eingesetzte Polymerdispersionen eine Dichte gemäß DIN 53217, ISO 2811 von 0,9 bis 1,2 g/cm³, insbesondere 0,95 bis 1,1 g/cm³. Erfindungsgemäß bevorzugt eingesetzte Polymerdispersionen weisen zudem eine Mindestfilmbildungstemperatur gemäß DIN ISO 2115 unterhalb von 5 °C, insbesondere unterhalb von 1 °C, auf.

Für optimale Anwendungseigenschaften ist es von Vorteil, wenn die ausgehend von der erfindungsgemäß eingesetzten Polymerdispersion erhältlichen Filme eine Glasübergangstemperatur T_{g} (DSC) unterhalb von -5 °C, insbesondere im Bereich von -5 °C bis -50 °C, vorzugsweise -15 °C bis -40 °C, besonders bevorzugt -20 °C bis -30 °C, aufweisen; grundsätzlich ist es aber auch möglich, Polymere mit höheren Glasübergangstemperaturen der resultierenden Filme einzusetzen, sofern diese mit geeigneten Weichmachern kombiniert werden. Des Weiteren ist es von Vorteil, wenn die ausgehend von der erfindungsgemäß eingesetzten Polymerdispersion erhältlichen Filme eine Reißkraft (in Anlehnung an DIN 53455) von mindestens 0,1 N/mm², insbesondere mindestens 0,2 N/mm², und/oder eine Reißdehnung (in Anlehnung an DIN 53455) von mindestens 1000 %, vorzugsweise mindestens 2000 %, besitzen.

Erfindungsgemäß werden üblicherweise alkaliresistente bzw. verseifungsstabile Polymerdispersionen bzw. Polymere eingesetzt.

Insbesondere werden als Polymerdispersionen vorzugsweise wässrige Polymerdispersionen eines Polymeren oder eines Gemisches von mindestens zwei Polymeren eingesetzt. Bei den Polymeren oder dem Gemisch aus zwei oder mehr Polymeren handelt es sich vorzugsweise um radikalisch polymerisierte Polymere, wie sie sich insbesondere aus ethylenisch ungesättigten Monomeren erhalten lassen. Das Polymer enthält vorzugsweise so genannte Hauptmonomere, insbesondere ausgewählt aus C₁-C₂₀-Alkyl(meth-)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, nichtaromatischen Kohlenwasserstoffen mit mindestens 2 konjugierten Doppelbindungen oder Mischungen dieser Monomeren. Im Einzelnen zu nennen sind z. B. Acrylsäurealkylester oder Methacrylsäurealkylester mit einem C₁-C₁₂-Alkylrest, wie Methylmethacrylat, Methylacrylat, n-Butylacrylat, Ethylacrylat und 2-Ethylhexylacrylat. Insbesondere sind auch Polymere geeignet, die sich durch Polymerisation von Gemischen von Acrylsäurealkylestern und/oder Methacrylsäurealkylestern erhalten lassen. Zur Herstellung erfindungsgemäß geeigneter Polymere eignen sich beispielsweise auch die Vinylester von Carbonsäuren mit 1 bis 20 C-Atomen. Zur Herstellung erfindungsgemäß geeigneter Polymere geeignet sind z. B. Vinyllaurat, Vinylstearat, Vinylpropionat, Versatsäurevinylester oder Vinylacetat oder Gemische aus zwei oder mehren der vorgenannten Verbindungen. Als vinylaromatische Verbindungen eignen sich beispielsweise Vinyltoluol, α- und p-Methylstyrol, α-Butylstyrol, 4-n-Butylstyrol, 4-n-Decylstyrol und Styrol. Beispiele für geeignete Nitrile sind Acrylnitril und Methacrylnitril. Zur Herstellung erfindungsgemäß geeigneter Polymere eignen sich ebenfalls Vinylhalogenide, beispielsweise mit Chlor, Fluor oder Brom substituierte, ethylenisch ungesättigte Verbindungen, wie Vinylchlorid oder Vinylidenchlorid oder deren Gemische. Zur Herstellung erfindungsgemäß geeignete Polymerer eignen sich darüber hinaus nichtaromatische Kohlenwasserstoffe mit 4 bis 8 C-Atomen und mindestens zwei olefinischen Doppelbindungen, wie Butadien, Isopren, und Chloropren. Weitere Monomere, die z. B. von 0 bis 40 Gew.-%, vorzugsweise von 0 bis 20 Gew.-% und besonders bevorzugt von 0,2 bis 10 Gew.-% in dem oder den Polymeren enthalten sein können, sind insbesondere C₁-C₁₀-Hydroxyalkyl(meth-)acrylate, (Meth-)Acrylamid sowie dessen am Stickstoff mit C₁-C₄-Alkyl substituierten Derivate, ethylenisch ungesättigte Carbonsäuren, Dicarbonsäuren, deren Halbester und Anhydride, z. B. (Meth-)Acrylsäure, Maleinsäure, Fumarsäure, Maleinsäureanhydrid, Maleinsäure- und Fumarsäurehalbester und Itaconsäure. Die Kurzschreibweise (Meth-)acryl bezeichnet im Sinne vorliegender Erfindung jeweils Methacryl, Acryl und Systeme, die Methacryl- und Acryleinheiten aufweisen. Analoges gilt für die Kurzbezeichnungen (Meth-)acrylat, (Meth-)Acrylamid usw..

Erfindungsgemäß bevorzugt werden Polymerdispersionen bzw. entsprechende Redispersionspulver auf Basis von vinyl-, (meth-)acryl-, styrol-, butadien- und/oder ethylenbasierten Polymeren eingesetzt, wobei der Begriff der Polymere erfindungsgemäß weit zu verstehen ist und nicht nur Polymere im engeren Sinne, sondern auch Copolymere, Terpolymere etc. umfasst. Insbesondere werden Polymerdispersionen bzw. entsprechende Redispersionspulver eingesetzt, welche auf Vinyl- oder (Meth-)acrylat-Basis, wie Vinylacetat, Vinylpropionat, Vinyllaurat, Vinylversatat, Vinylchlorid, Vinylidenchlorid und/oder geradkettigen oder verzweigten Vinylestern mit 1 bis 20 C-Atomen, Acryl- und Methacryl-Monomeren (insbesondere Estern), Styrol, Butadien und/oder Ethylen aufgebaut sind.

Wie zuvor beschrieben, können als Polymerdispersionen die unterschiedlichsten Systeme zum Einsatz kommen. Vorzugsweise werden als Polymerdispersionen Dispersionen auf Basis von (Meth-)Acrylat-Copolymeren, Styrol/(Meth-)Acrylat-Copolymeren, Styrol/Butadien-Copolymeren und/oder Vinylacetat/ Ethylen-Copolymeren, eingesetzt. Besonders vorteilhafte Eigenschaften werden mit Polymerdispersionen von Styrol/(Meth-)Acrylat-Copolymeren (z. B. Acronal® DS 5011, Acronal® DS 3511 und Vinagen LAS 4055 ZF der BASF Aktiengesellschaft, Ludwighafen, Mowilith LDM 6482 der Fa. Celanese, Frankfurt, Revacryl 123 und Revacryl 387 der Synthomer GmbH, Lipaton XA 491 der Fa. Polymerlatex, Marl) oder (Meth-)Acrylat-Copolymeren (z.B. Plextol X4002 der Fa. Polymerlatex, Marl, Acronal® A 378 der BASF Aktiengesellschaft, Ludwighafen) erreicht; denn die Anmelderin hat überraschenderweise herausgefunden, dass Dispersionen auf Basis von Styrol/(Meth-)Acrylat-Copolymeren oder (Meth-)Acrylat-Copolymeren im Rahmen der erfindungsgemäßen Baustoffzusammensetzung zu einer besonders guten Standfestigkeit und Wasserfestigkeit der resultierenden Abdichtung bzw. des resultierenden Films führen, da der resultierende Film besonders konsistent und kohärent bleibt. Dennoch sind grundsätzlich alle vorgenannten Kunststoffdispersionen geeignet, um im Rahmen der erfindungsgemäßen Baustoffzusammensetzung eingesetzt zu werden.

Die vorgenannten Polymerdispersionen enthalten keine Epoxidharze. Infolgedessen sind sie umweltfreundlich und praxisgerechter bzw. einfacher in der Verarbeitung und Handhabung. Zudem ist der Preis der erfindungsgemäßen Baustoffzusammensetzung gegenüber epoxidharzbasierten Systemen hierdurch deutlich reduziert.

Die Baustoffzusammensetzungen enthalten die Polymerdispersion oder das Redispersionspulver beispielsweise in einer Menge von 1 bis 95 Gew.-%, vorzugsweise 10 bis 80 Gew.-%, besonders bevorzugt 15 bis 60 Gew.-% und ganz besonders bevorzugt 15 bis 50 Gew.-%, jeweils berechnet auf das Trockengewicht des Polymers und bezogen auf das Gesamtgewicht der Baustoffzusammensetzung.

Was die erfindungsgemäß eingesetzten Polystyrolpartikel anbelangt, so können diese insbesondere in Form von so genannten Polystyrolperlen oder Polystyrolkügelchen oder in Form von Polystyrolgranulat vorliegen. Dabei kann es sich bei den Polystyrolpartikeln um Recyclingmaterial handeln, das beispielsweise durch Zerkleinerung und gegebenenfalls Aufreinigung von Polystyrolplatten oder anderen Polystyrolformkörpern erhalten wird. Abhängig von der Art der Zerkleinerung können die resultierenden Polystyrolpartikel sehr gleichmäßig geformt sein und überwiegend als Perlen oder Kügelchen vorliegen. Es können aber bei entsprechend hoher mechanischer Belastung auch ungleichmäßig geformte Polystyrolpartikel gebildet werden. Erfindungsgemäß bevorzugt eingesetzte Polystyrolpartikel weisen Teilchengrößen (Teilchendurchmesser) im Bereich von 0,1 bis 3,0 mm, insbesondere 0,2 bis 2,0 mm, vorzugsweise 0,5 bis 1,5 mm, auf und besitzen Schüttdichten gemäß DIN EN 459-2 im allgemeinen von 5 bis 30 g/l, insbesondere 7,5 bis 15 g/l, vorzugsweise 10 bis 13 g/l.

Gemäß einer erfindungsgemäß besonders bevorzugten Ausführungsform können die Polystyrolpartikel aus expandierbarem und/oder expandiertem und/oder extrudiertem Polystyrol gebildet sein. Expandierbares Polystyrol enthält im Allgemeinen mindestens ein geeignetes Treibmittel, vorzugsweise ein Alkan, insbesondere Pentan und/oder Pentanisomere.

Erfindungsgemäß besonders bevorzugte Polystyrolpartikel sind beispielsweise unter der Bezeichnung "NOVA Chemicals®" von der NOVA Brands Ltd. erhältlich.

Die Baustoffzusammensetzungen enthalten die Polystyrolpartikel beispielsweise in einer Menge von 0,005 bis 10 Gew.-%, vorzugsweise 0,05 bis 2,5 Gew.-%, besonders bevorzugt 0,1 bis 2,0 Gew.-%, jeweils bezogen auf das Gesamtgewicht der Baustoffzusammensetzung.

Die erfindungsgemäßen bitumenfreien Baustoffzusammensetzungen enthalten weiterhin Gummiteilchen, d.h. Teilchen aus vulkanisiertem natürlichem oder synthetischem Kautschuk, Teilchen aus thermoplastischem Kautschuk oder Mischungen davon.

Dabei kommen im Allgemeinen
- Teilchen aus vulkanisiertem Naturkautschuk (NR) und/oder
- Teilchen aus vulkanisiertem synthetischen Kautschuk ausgewählt aus Styrol-Butadien-Kautschuk (SBR), Ethylen-Propylen-Elastomeren (EPM und EPDM), Butylkautschuk (IIR), Nitrilkautschuk (NBR), Isoprenkautschuk (IR), Polybutadienkautschuk (BR), Polychloropren (CR) und/oder Ethylen-Vinylacetat-Copolymeren (EVA) und/oder
- Teilchen aus thermoplastischem Kautschuk ausgewählt aus Styrol-Butadien-Styrol-Copolymeren (SBS), Styrol-Isopren-Styrol-Copolymeren (SIS), Styrol-Ethylenbutylen-Styrol-Copolymeren (SEBS), thermoplastischen Olefinen und/oder den Elastomerlegierungen aus vernetztem EPDM und Propylen (EPDM/PP), aus vernetztem Naturkautschuk und Propylen (NR/PP), aus Ethylenvinylacetat und Vinylidenchlorid (EVA/PVDC), aus vernetztem Nitrilkautschuk und Propylen (NBR/PP) und/oder
- Teilchen aus Gemischen der genannten Kautschuktypen
zum Einsatz.

Vorzugsweise werden Teilchen eingesetzt, die durch Recycling entsprechender Altkautschuke erhalten werden.

Bevorzugt werden Teilchen aus vulkanisiertem Naturkautschuk (NR), Teilchen aus vulkanisiertem synthetischen Kautschuk oder Teilchen aus Gemischen dieser Kautschuktypen eingesetzt, wobei Teilchen aus einer vulkanisierten NR/SBR-Kautschukmischung und/oder einer vulkanisierten EPM/EPDM-Kautschukmischung besonders bevorzugt sind.

Bei den Teilchen aus vulkanisiertem Naturkautschuk, vulkanisiertem synthetischen Kautschuk, thermoplastischem Kautschuk oder Mischungen davon handelt es sich vorzugsweise um entsprechende Pulver und/oder Granulate mit Teilchengrößen von 0,01 bis 3,0 mm, vorzugsweise 0,01 bis 1,5 mm, besonders bevorzugt 0,01 bis 0,7 mm, wobei die Teilchengrößen mittels Siebanalyse auf einer Retsch-Analysesiebmaschine AS 200 control gemäß prEN14243 bestimmt werden.

Besonders bevorzugt sind feinvermahlene Granulate einer vulkanisierten NR/SBR-Kautschukmischung und/oder einer vulkanisierten EPM/EPDM-Kautschukmischung, wobei die Teilchen vorzugsweise Teilchengrößen von 0,01 bis 1,5 mm, besonders bevorzugt Teilchengrößen von 0,01 bis 0,7 mm, jeweils bestimmt mittels Siebanalyse auf einer Retsch-Analysesiebmaschine AS 200 control gemäß prEN14243, aufweisen.

Die Teilchen einer vulkanisierten NR/SBR-Kautschukmischung können beispielsweise durch mechanische Zerkleinerung von Altreifen, vorzugsweise von LKW-Reifen hergestellt werden und sind in verschiedenen Varianten, beispielsweise unter der Bezeichnung Gummimehl, kommerziell erhältlich. Die Teilchen einer vulkanisierten EPM/EPDM-Kautschukmischung können beispielsweise durch mechanische Zerkleinerung technischer EPM/EPDM-Abfälle hergestellt werden und sind beispielsweise unter der Bezeichnung EPM/EPDM-Granulat oder EPM/EPDM-Mehl kommerziell erhältlich.

Im Rahmen der vorliegenden Erfindung ist es vorteilhaft, wenn die eingesetzten Teilchen aus vulkanisiertem Naturkautschuk, vulkanisiertem synthetischen Kautschuk, thermoplastischem Kautschuk oder Mischungen davon Schüttgewichte von 100 bis 600 g/l, insbesondere 250 bis 500 g/l, vorzugsweise 350 bis 500 g/l aufweisen.

Die Baustoffzusammensetzungen enthalten die Teilchen aus vulkanisiertem Naturkautschuk, vulkanisiertem synthetischen Kautschuk, thermoplastischem Kautschuk oder deren Mischungen beispielsweise in einer Menge von 0,01 bis 50 Gew.-%, vorzugsweise 1 bis 30 Gew.-%, besonders bevorzugt 5 bis 30 Gew.-% und ganz besonders bevorzugt 10 bis 25 Gew.-%, jeweils bezogen auf das Gesamtgewicht der Baustoffzusammensetzung.

Was die erfindungsgemäß eingesetzten synthetischen Mikrohohlkugeln anbelangt, so sind diese auf Basis von organischen Polymeren ausgebildet. Zum Einsatz kommen beispielsweise organische Polymere auf Basis von Monomeren aus der Gruppe von Vinylidenchlorid, Acrylnitril und/oder Methyl(meth-)acrylaten, vorzugsweise Vinylidenchlorid/Acrylnitril-Copolymere; solche Produkte werden beispielsweise von Akzo Nobel unter der Bezeichnung "Expancel®", z.B. "Expancel® WE", oder von der Firma Sika Addiment GmbH vertrieben. Alternativ können solche synthetischen Mikrohohlkugeln auch auf Basis von Phenolharzen ausgebildet sein (z. B. Produkte von der Fa. Asia Pacific Microspheres Sdn. Bhd., Malaysia). Erfindungsgemäß bevorzugt werden aber synthetische Mikrohohlkugeln auf Basis von Vinylidenchlorid/Acrylnitril-Copolymeren oder auf Basis von Polymeren, welche auf den Monomeren Vinylidenchlorid und/oder Acrylnitril und/oder Methyl(meth-)acrylaten basieren, eingesetzt.

Die erfindungsgemäß eingesetzten synthetischen Mikrohohlkugeln weisen im allgemeinen Teilchengrößen (Teilchendurchmesser) von 1 bis 300 µm, insbesondere 1 bis 200 µm, vorzugsweise 5 bis 150 µm, besonders bevorzugt 5 bis 100 µm, und/oder mittlere Teilchengrößen von 10 bis 100 µm, insbesondere 20 bis 80 µm, vorzugsweise 20 bis 60 µm, auf, bestimmt mittels Laser-Diffraktion / Kleinwinkel-Laserlicht-Streuung unter Einsatz eines Malvern Mastersizer 200.

Die erfindungsgemäß einsetzbaren synthetischen Mikrohohlkugeln können beispielsweise in expandierbarer und/oder expandierter Form vorliegen. Derartige synthetische Mikrohohlkugeln, insbesondere in expandierbarer Form, können ein Treibmittel, vorzugsweise ein Alkan, insbesondere Pentan und/oder Pentanisomere, enthalten, wobei das Treibmittel bei Erwärmen über eine bestimmte Temperatur die expandierbaren Kugeln zur Expansion und somit zur endgültigen Teilchengröße bringt.

Erfindungsgemäß bevorzugt eingesetzte synthetische Mikrohohlkugeln weisen einen Feststoffgehalt von 5 bis 20 Vol.-%, insbesondere 7 bis 17 Vol.-%, bezogen auf die synthetischen Mikrohohlkugeln, auf. Der übrige Anteil entfällt auf den vom Hüllmaterial umschlossenen Hohlraum.

Die synthetischen Mikrohohlkugeln sind in den Baustoffzusammensetzungen vorzugsweise in einer Menge von 0,005 bis 30 Gew.-%, besonders bevorzugt 0,01 bis 15 Gew.-%, weiter bevorzugt 0,1 bis 10 Gew.-% und ganz besonders bevorzugt 1 bis 5 Gew.-%, jeweils bezogen auf das Gesamtgewicht der Baustoffzusammensetzung, enthalten.

Die erfindungsgemäßen Baustoffzusammensetzungen sind frei von Bitumen und keramischen Mikrohohlkugeln. Darunter ist zu verstehen, dass die Baustoffzusammensetzungen Bitumen und keramische Mikrohohlkugeln maximal in einer Menge von 10 ppm enthalten. Vorzugsweise enthalten die erfindungsgemäßen Baustoffzusammensetzungen jeweils maximal 1 ppm Bitumen und keramische Mikrohohlkugeln, besonders bevorzugt enthalten sie kein Bitumen und keine keramischen Mikrohohlkugeln.

Die erfindungsgemäße Baustoffzusammensetzung, insbesondere die bitumenfreie Abdichtungsmasse, kann neben den zuvor beschriebenen Inhaltsstoffen gegebenenfalls mindestens ein anorganisches Bindemittel enthalten. Unter dem Begriff des anorganischen Bindemittels wird erfindungsgemäß insbesondere eine Sammelbezeichnung für solche anorganischen Stoffe verstanden, welche gleich- oder verschiedenartige Stoffe miteinander verbinden. In den erfindungsgemäßen Baustoffzusammensetzungen kommt den anorganischen Bindemitteln jedoch nicht primär die Funktion zu, die Zusammensetzung zu binden. Vielmehr wird das anorganische Bindemittel eingesetzt, um überschüssiges Wasser, welches nicht durch einen physikalischen Vorgang, insbesondere durch Verdampfen, beim Abtrocknen entfernt wird, zu binden.

Als anorganische Bindemittel können im Rahmen der vorliegenden Erfindung hydraulische, latenthydraulische, puzzolanische oder nichthydraulische anorganische Bindemittel, insbesondere hydraulische und latenthydraulische anorganische Bindemittel, besonders bevorzugt hydraulische anorganische Bindemittel, zum Einsatz kommen.

Erfindungsgemäß geeignete anorganische Bindemittel können beispielsweise ausgewählt sein aus der Gruppe von Zementen; Kalk; Weißkalk; Calciumsulfaten, wie Anhydrit und Gips; gemahlenen Schlacken, wie beispielsweise Hüttensand; Filteraschen; sowie Mischungen der vorgenannten Verbindungen.

In einer erfindungsgemäß besonders bevorzugten Ausführungsform wird als anorganisches Bindemittel ein Zement eingesetzt. Was den im Rahmen der vorliegenden Erfindung verwendeten Begriff der Zemente anbelangt, so wird dieser Begriff im Rahmen der vorliegenden Erfindung umfassend verwendet und bezeichnet insbesondere feingemahlene hydraulische Bindemittel, d. h. solche mineralischen Stoffe, die unter Wasseraufnahme an Luft und selbst unter Wasser steinartig erhärten und nach dem Aushärten wasserbeständig sind. Chemisch bestehen Zemente überwiegend aus Calciumsilicaten, Calciumaluminaten und Calciumferriten, welche beim "Brennen" der Rohstoffe (z. B. Kalkstein, Ton, Kalkmergel, Tonmergel etc.) bei Temperaturen bis zu ca. 1.500 °C im Klinker entstehen. Die wesentlichen Eigenschaften der Zemente sind abhängig von der Zusammensetzung der Rohstoffe, vom Mengenanteil der zu mahlenden Bestandteile und von der Mahlfeinheit.

Besonders bevorzugt wird der Zement aus der Gruppe von Calciumaluminatzementen, Calciumsulfoaluminatzementen, Portlandzementen, Portlandkompositzementen, Hochofenzementen sowie deren Mischungen ausgewählt.

Gemäß einer besonderen Ausführungsform der vorliegenden Erfindung kann als anorganisches Bindemittel ein Gemisch von mindestens zwei voneinander verschiedenen hydraulischen anorganischen Bindemitteln, insbesondere Zementen, besonders bevorzugt ein Gemisch von Calciumaluminatzement und Portlandzement und/oder Portlandkompositzement, eingesetzt werden.

Im Rahmen der Baustoffzusammensetzung nach der vorliegenden Erfindung übt das anorganische Bindemittel, insbesondere der Zement, eine Doppelfunktion aus: Zum einen "bricht" das anorganische Bindemittel sozusagen die Polymerdispersion, so dass nach Auftrag der erfindungsgemäßen Baustoffzusammensetzung ein Verfilmungsprozess einsetzen kann, und zum anderen bindet das anorganische Bindemittel überschüssiges Wasser, welches nicht durch einen physikalischen Vorgang, insbesondere durch Verdampfen, beim Abtrocknen entfernt wird. Insbesondere bewirkt das erfindungsgemäß fakultativ eingesetzte anorganische Bindemittel eine erhöhte Festigkeit bzw. eine verbesserte Kohäsion, insbesondere eine erhöhte Frühstandfestigkeit, der aufgetragenen Baustoffzusammensetzung nach ihrer Anwendung bzw. Applikation.

Die Einarbeitung einer anorganischen Bindemittelkomponente, insbesondere von Zement, führt neben einem schnelleren "Brechen" der Dispersion und einer damit einhergehenden besseren Verfilmbarkeit zu schnelleren bzw. kürzeren Aushärtungszeiten und zudem zu einer Verbesserung des Schwundverhaltens.

Die anorganischen Bindemittel sind in den Baustoffzusammensetzungen vorzugsweise in einer Menge von 0,05 bis 90 Gew.-%, besonders bevorzugt 2,5 bis 80 Gew.-%, weiter bevorzugt 5 bis 60 Gew.-% und ganz besonders bevorzugt 10 bis 55 Gew.-%, jeweils bezogen auf das Gesamtgewicht der Baustoffzusammensetzung, enthalten.

Neben den zuvor beschriebenen Inhaltsstoffen bzw. Komponenten kann die Baustoffzusammensetzung nach der vorliegenden Erfindung außerdem weitere Inhaltsstoffe und/oder Additive enthalten. Diese können insbesondere ausgewählt sein aus der Gruppe von Netzmitteln, Entschäumern, Konservierungsmitteln, Verdickungsmitteln, Verflüssigern, anorganischen Füllstoffen, mineralischen Zuschlagsstoffen, Erstarrungsverzögerern, Erstarrungsbeschleunigern, Fasern, Weichmachern, Hydrophobierungsmitteln, Pigmenten etc. sowie Mischungen der zuvor genannten Stoffe.

Wenn der erfindungsgemäßen Baustoffzusammensetzung beispielsweise ein zusätzliches Verdickungsmittel zur Einstellung der Fließfähigkeit bzw. Viskosität zugesetzt wird, so können vorteilhafterweise (Meth-)Acrylsäure-Polymere und deren Ester, (Meth-)Acrylsäure-Copolymere und deren Ester, Butadien-Acrylat-Copolymere, Butadien-Styrol-Copolymere, Vinylpyrrolidon-Copolymere, Polyurethane, Methylhydroxyethylcellulose, Methylcellulosen und deren Mischether und/oder Kieselsäure, vorzugsweise (Meth-)Acrylsäureester-Copolymere und deren Mischung mit Methylcelluloseethern, zum Einsatz kommen.

Durch Zugabe von Fasern lassen sich die Anwendungseigenschaften der Baustoffzusammensetzung, insbesondere dessen mechanische Stabilität nach dem Aushärten beeinflussen.

Prinzipiell können beliebige Fasern zum Einsatz kommen, wobei mineralische Fasern und natürliche und synthetische Kunststofffasern gleichermaßen in Betracht kommen. Vorzugsweise werden jedoch Polyolefinfasern, wie z. B. Polyethylen- oder Polypropylenfasern, oder aber Cellulosefasern eingesetzt.

Die Baustoffzusammensetzungen können die Fasern insbesondere in Mengen von bis zu 2 Gew.-% enthalten, vorzugsweise in Mengen von bis zu 1 Gew.-%, besonders bevorzugt im Bereich von 0,1 bis 1 Gew.-%, bezogen auf die bauchemischen Produkte.

Bevorzugt eingesetzte Fasern weisen Faserlängen im Bereich von 50 bis 5.000 µm, insbesondere 50 bis 500 µm, auf.

Darüber hinaus können in die erfindungsgemäße Baustoffzusammensetzung auch Recyclingstoffe, z. B. Korkmehle etc., eingearbeitet sein.

Grundsätzlich kann die erfindungsgemäße Baustoffzusammensetzung als Einkomponenten-System (1K-System) oder als Zweikomponenten-System (2K-System) formuliert sein. Bevorzugt ist die Formulierung als Zweikomponenten-System. Denkbar ist aber auch ein Drei- oder Mehrkomponenten-System. Diese Formulierung bietet sich etwa bei einer Anwendung der Baustoffzusammensetzung im dekorativen Bereich an. So können als 3. Komponente farbgebende Füllstoffe, wie farbiger Sand oder Pigmente vorgesehen sein, aber auch eingefärbte Gummiteilchen und/oder eine flüssige farbgebende Komponente, beispielsweise in Form einer kommerziell erhältlichen Abtönfarbe. Je nach gewünschter Farbe der resultierenden Beschichtung kann eine oder verschiedene farbgebende Komponenten in unterschiedlicher Menge und Abmischung den übrigen Komponenten der Baustoffzusammensetzung vor deren Anwendung gezielt zugegeben werden.

Im Falle der Formulierung als Einkomponenten-System kann die erfindungsgemäße Baustoffzusammensetzung als 1-K-Trockensystem bzw. 1-K-Pulversystem oder auch als 1-K-Flüssigsystem vorliegen.

Vorzugsweise liegt die Baustoffzusammensetzung in diesem Fall jedoch als 1-K-Trockensystem bzw. 1-K-Pulversystem vor, d. h. besteht ausschließlich aus einer einzigen Feststoffkomponente bzw. aus einer einzigen Feststoffmischung, die dann vor ihrer Verwendung mit der erforderlichen Wassermenge angemacht wird. Als Polymerkomponente kommt hier ein Redispersionspulver der vorgenannten Art zum Einsatz.

Im Falle der erfindungsgemäß bevorzugten Formulierung als Zweikomponenten-System wird als Polymerkomponente üblicherweise eine Polymerdispersion eingesetzt und liegen Polymerdispersion einerseits und gegebenenfalls vorhandenes anorganisches Bindemittel andererseits vorteilhafterweise in unterschiedlichen Komponenten vor, wobei die Polymerdispersion im allgemeinen Bestandteil einer Flüssigkomponente ist, wohingegen das anorganische Bindemittel grundsätzlich Bestandteil einer Feststoff- bzw. Pulverkomponente oder einer Flüssigkomponente ist, vorzugsweise aber Bestandteil einer Feststoff- bzw. Pulverkomponente ist. Grundsätzlich besteht aber auch bei dieser Ausführungsform die Möglichkeit, anstelle der Polymerdispersion das entsprechende Redispersionspulver zu verwenden, wobei dies jedoch erfindungsgemäß weniger bevorzugt ist; nachfolgend wird das erfindungsgemäß bevorzugte 2K-System jedoch ausschließlich auf Basis der Polymerdispersion beschrieben, wobei für den Fachmann selbstverständlich ist, dass er anstelle der Polymerdispersion auch das entsprechende Redispersionspulver einsetzen kann, sofern dies vor Anwendung mit der entsprechenden Wassermenge angemacht wird.

Wird die erfindungsgemäße Baustoffzusammensetzung als Zweikomponenten-System (2K-System) formuliert, wobei Polymerdispersion einerseits und anorganisches Bindemittel andererseits in unterschiedlichen Komponenten vorliegen, können die Teilchen aus vulkanisiertem Naturkautschuk, vulkanisiertem synthetischen Kautschuk, thermoplastischem Kautschuk oder deren Mischungen in Komponente 1 oder Komponente 2 vorliegen. Es ist auch möglich, dass ein Teil der Teilchen in der 1. Komponente und der verbleibende Teil in der 2. Komponente vorliegt. Bevorzugt liegen die Teilchen jedoch in der Komponente vor, die das anorganische Bindemittel enthält. Wie bereits ausgeführt, handelt es sich dabei vorzugsweise um eine Feststoff- bzw. Pulverkomponente.

Gemäß einer besonderen Ausführungsform der vorliegenden Erfindung ist Gegenstand der vorliegenden Erfindung somit eine bitumenfreie Baustoffzusammensetzung, insbesondere wie zuvor beschrieben, wobei die Baustoffzusammensetzung als Zweikomponenten-System (2K-System) formuliert ist, wobei das Zweikomponenten-System einerseits eine Komponente (A), insbesondere als Flüssigkomponente, und andererseits eine Komponente (B), insbesondere als Trocken- bzw. Pulverkomponente oder aber als Flüssigkomponente, vorzugsweise als Trocken- bzw. Pulverkomponente, umfasst,
- wobei die Komponente (A), jeweils mengenbezogen auf die Komponente (A),
   - mindestens eine Polymerdispersion, insbesondere in Mengen von 2 bis 95 Gew.-%, vorzugsweise 40 bis 95 Gew.-%, besonders bevorzugt 70 bis 95 Gew.-%, jeweils berechnet auf das Gesamtgewicht der Polymerdispersion,
   - Polystyrolpartikel, insbesondere in Mengen von 0,01 bis 10 Gew.-%, vorzugsweise 0,05 bis 5 Gew.-%, besonders bevorzugt 1,0 bis 2,0 Gew.-%, und
   - auf Basis von organischen Polymeren ausgebildete synthetische Mikrohohlkugeln, insbesondere in Mengen von 0,01 bis 50 Gew.-%, vorzugsweise 0,05 bis 15 Gew.-%, besonders bevorzugt 0,1 bis 5 Gew.-%,
   enthält und
- wobei die Komponente (B), jeweils mengenbezogen auf die Komponente (B),
   - mindestens ein anorganisches Bindemittel, vorzugsweise Zement, insbesondere in Mengen von 0,01 bis 95 Gew.-%, vorzugsweise 5 bis 60 Gew.-%, besonders bevorzugt 10 bis 55 Gew.-%, und
   - Teilchen aus vulkanisiertem Naturkautschuk, vulkanisiertem synthetischen Kautschuk, thermoplastischem Kautschuk oder deren Mischungen, insbesondere in Mengen von 0,01 bis 90 Gew.-%, vorzugsweise 1 bis 60 Gew.-%, besonders bevorzugt 5 bis 30 Gew.-% und ganz besonders bevorzugt 10 bis 25 Gew.-%,
enthält.

In einer Variante dieser besonderen Ausführungsform, enthält Komponente (A) die Teilchen aus vulkanisiertem Naturkautschuk, vulkanisiertem synthetischen Kautschuk, thermoplastischem Kautschuk oder deren Mischungen. Der Anteil an anorganischem Bindemittel kann in diesem Fall bis zu 100 Gew.-% betragen und liegt vorzugsweise bei 0,01 bis 100 Gew.-%.

In der erfindungsgemäß weniger bevorzugten Ausführungsform, wonach auch die Komponente (B) als Flüssigkomponente formuliert ist, kann die Komponente (B) ein Dispergiermittel, insbesondere ein gegenüber dem anorganischen Bindemittel inertes Dispergiermittel, enthalten, welches insbesondere ausgewählt sein kann aus der Gruppe von organischen Lösemitteln, wie organischen Kohlenwasserstoffen, Ölen, insbesondere Mineral- und Paraffinölen, Weichmachern und dergleichen, wobei der Siedepunkt bzw. der Siedebereich dieser organischen Verbindungen bei Atmosphärendruck mindestens 200 °C betragen sollte. Die Menge an Dispergiermittel(n) in der Komponente (B) kann bei dieser Ausführungsform in weiten Bereichen variieren; insbesondere beträgt sie 1 bis 100 Gew.-Teile, insbesondere 5 bis 50 Gew.-Teile, besonders bevorzugt 10 bis 30 Gew.-Teile.

Die Komponente (A) einerseits und die Komponente (B) andererseits können jeweils in variablen Mischungsverhältnissen eingesetzt werden. Beispielsweise kann das Mischungsverhältnis von (A) : (B) im Bereich von 30 : 1 bis 1 : 2 Gew.-Teilen, insbesondere 10 : 1 bis 1 : 2 Gew.-Teilen, vorzugsweise 4 : 1 bis 1 : 2 Gew.-Teilen, bevorzugt 3 : 1 bis 1 : 2 Gew.-Teilen, variieren. Gemäß einer besonders bevorzugten Ausgestaltung beträgt das Mischungsverhältnis (A) : (B) etwa 1 : 1 Gew.-Teile.

Zu Zwecken der Anwendung werden im Falle des Zweikomponenten-Systems die beiden Komponenten (A) und (B) vorteilhafterweise unmittelbar vor der Anwendung in Kontakt gebracht, insbesondere miteinander vermischt bzw. homogenisiert, so dass eine innige bzw. homogene Mischung der Komponenten (A) und (B) bei der Anwendung vorliegt.

Komponente (B) können vorteilhafterweise anorganische Füllstoffe bzw. mineralische Zuschläge ("schwere Füllstoffe" bzw. "schwere Zuschläge") zugesetzt sein.

Erfindungsgemäß bevorzugt ist es, wenn die Flüssigkomponente (A) im allgemeinen eine Dichte von 0,4 bis 1,0 kg/l, insbesondere 0,5 bis 0,8 kg/l, vorzugsweise 0,5 bis 0,6 kg/l, aufweist, während die Komponente (B), insbesondere als Feststoffkomponente (B), eine Dichte von 0,8 bis 2,5 kg/l, insbesondere 1,0 bis 2,0 kg/l, vorzugsweise 1,0 bis 1,3 kg/l, aufweist. Insbesondere sollte die Dichte der Feststoffkomponente (B) mindestens das 1,5fache, insbesondere mindestens das 1,7fache, insbesondere mindestens das 2fache, der Dichte der Flüssigkomponente (A) betragen. Dies ermöglicht ein schnelles und homogenes, insbesondere staubarmes Anrühren bzw. Mischen der beiden Komponenten vor der Anwendung.

Die Tatsache, dass für den Fall des Zweikomponenten-Systems die Polystyrolpartikel und die synthetischen Mikrohohlkugeln vorzugsweise in der Flüssigkomponente (A) vorliegen, hat den Vorteil, dass eine Entmischung dieser Bestandteile nicht stattfindet. Vielmehr wird aufgrund des großen Dichteunterschiedes - die schweren Inhaltsstoffe und Zuschläge befinden sich im wesentlichen in der Feststoffkomponente (B), während die leichten Inhaltsstoffe und Zuschläge sich in der Flüssigkomponente (A) befinden - eine exzellente Mischbarkeit der beiden Komponenten (A) und (B) miteinander erreicht, was eine rasche Anwendung ermöglicht.

Die erfindungsgemäße bitumenfreie Baustoffzusammensetzung nach der vorliegenden Erfindung weist insgesamt eine Vielzahl von Vorteilen auf:
Zum einen ist sie aufgrund der Inhaltsstoffe umweltfreundlich und preisgünstig, was ihre Anwendung begünstigt. Nach ihrem Auftrag als Abdichtungsmasse zeigt sie im Wesentlichen keine Schrumpfung.

Die erfindungsgemäße Baustoffzusammensetzung - unabhängig von ihrer Formulierung als Einkomponenten-, Zweikomponenten- oder Mehrkomponenten-System - zeigt ausgezeichnete Abdichtungseigenschaften, wie sie üblicherweise nur mit bitumenhaltigen Abdichtungsmassen nach dem Stand der Technik erreicht werden können. Insbesondere erfüllt die erfindungsgemäße Baustoffzusammensetzung die Anforderungen, wie sie in der eingangs genannten DIN 18195 an bitumenhaltige Abdichtungsmassen und in den entsprechenden Richtlinien an zementäre bzw. mineralische Dichtschlämme und an kunststoffmodifizierte Bitumendickbeschichtungen gestellt sind.

Die erfindungsgemäße Baustoffzusammensetzung eignet sich für die Bauwerksabdichtung, insbesondere im erdberührten Bereich, aber auch für die Dachabdichtung. Insbesondere ist die erfindungsgemäße Baustoffzusammensetzung auch dickschichtig, und zwar auch an senkrechten Wänden, verarbeitbar bzw. auftragbar. Es lassen sich standfeste Schichten an vertikalen Flächen von bis zu 10 bis 15 mm Schichtdicke erzielen.

Überraschenderweise ist die erfindungsgemäße Baustoffzusammensetzung, obwohl sie auf Basis von relativ teuren Polymerdispersionen hergestellt wird, auf dem gleichen Preisniveau wie Bitumenemulsionen entwickelt worden. Ferner überrascht, dass die erfindungsgemäße Baustoffzusammensetzung im Falle einer Zweikomponenten-Formulierung sehr schnell, insbesondere ohne große Staubentwicklung, anzumischen ist (d. h. Anrühren der Flüssigkomponente mit der Pulverkomponente). Weiterhin überrascht, dass auch in höheren Schichtdicken ein praktisch schwundfreies Erhärten der Abdichtung stattfindet; dies ist besonders wichtig und bietet eine hohe Sicherheit, da es infolgedessen nicht zum Auftreten von Schwundrissen kommen kann, welche zwangsläufig zu Undichtigkeiten führen würden.

Das im Wesentlichen schwundfreie Abtrocknen bzw. Aushärten kann beispielsweise wie folgt veranschaulicht werden: Wenn die erfindungsgemäße Baustoffzusammensetzung im nassen Zustand mit einer Schichtdicke beispielsweise von etwa 3 mm aufgetragen wird, resultiert eine Beschichtung, welche auch im abgetrockneten bzw. ausgehärteten Zustand eine Schichtdicke in derselben Größenordnung (d. h. also von etwa 3 mm) aufweist; infolgedessen wird eine exzellente Kohäsion der erfindungsgemäßen Abdichtung unter Vermeidung von jeglichen Schwundrissen erreicht. Der Schwund bzw. die Schrumpfung beträgt bei Anwendung der erfindungsgemäßen Baustoffzusammensetzungen in der Regel nicht mehr als 8 bis 10 %. Abdichtungssysteme des Standes der Technik dagegen zeigen im Allgemeinen beim Abtrocknen bzw. Aushärten einen Schwund bzw. eine Schrumpfung von etwa 20 bis 25 %. Werden Systeme des Standes der Technik beispielsweise im nassen Zustand mit einer Schichtdicke von 4 mm aufgetragen, so resultieren Abdichtschichten im trockenen bzw. ausgehärteten Zustand von nur 3 mm, was in der Praxis zu einer signifikanten Rissbildung führt, wenn man dieses Phänomen bei der Anwendung nicht ausreichend berücksichtigt.

Die zuvor genannten Besonderheiten sind in der speziellen Rezeptur der erfindungsgemäßen Baustoffzusammensetzung begründet, insbesondere in der Kombination einer im Allgemeinen wässrigen Polymerdispersion mit wiederum einer Kombination spezieller Leichtzuschläge, nämlich Polystyrolpartikeln und synthetischen Mikrohohlkugeln, sowie Teilchen aus vulkanisiertem Naturkautschuk, vulkanisiertem synthetischen Kautschuk, thermoplastischem Kautschuk oder Mischungen davon. Die Anmelderin hat überraschenderweise herausgefunden, dass durch Einsatz der genannten Kautschukteilchen auf die nachteilige Zugabe von keramischen Mikrohohlkugeln verzichtet werden kann. Gemäß Stand der Technik ist letztere zwingend erforderlich, um die zuvor beschriebenen Effekte zu erreichen.

Ein weiterer Vorteil der vorliegenden Erfindung ist darin zu sehen, dass im Allgemeinen auf einen Weichmacher bzw. eine Weichmacherkomponente (Plastifizierungsmittel) verzichtet werden kann.

Insgesamt zeigt die erfindungsgemäße bitumenfreie Baustoffzusammensetzung - neben ausgezeichneten Abdichtungseigenschaften, wie sie üblicherweise nur mit bitumenhaltigen Abdichtungsmassen erreicht werden können - also insbesondere ein ausgezeichnetes Schrumpfverhalten nach dem Auftrag.

Die erfindungsgemäßen Baustoffzusammensetzungen eignen sich bei entsprechender Zusammensetzung zudem auch hervorragend zur dekorativen Abdichtung im sichtbaren Bereich. So können der Baustoffzusammensetzung problemlos farbgebende Füllstoffe, wie farbiger Sand oder Pigmente, aber auch eingefärbte Gummiteilchen oder flüssige farbgebende Komponenten, wie beispielsweise kommerziell erhältliche Abtönfarbe, zugegeben werden. Auf diese Weise lassen sich sehr einfach Baustoffzusammensetzungen und daraus hergestellte Abdichtungsschichten unterschiedlicher Färbung erhalten.

Unabhängig davon, ob die erfindungsgemäße Baustoffzusammensetzung als Einkomponenten-, Zweikomponenten- oder Mehrkomponenten-System formuliert wird, können neben den zuvor genannten Inhaltsstoffen außerdem noch weitere Leichtzuschläge zugesetzt sein. Diese Leichtzuschlagstoffe weisen typischerweise Dichten von weniger als 2000 kg/m³, bevorzugt weniger als 1500 kg/m³, ganz besonders bevorzugt weniger als 1200 kg/m³ oder gar weniger als 1000 kg/m³ auf. Bei der Auswahl der Leichtzuschlagstoffe ist darauf zu achten, dass erfindungsgemäß keine keramischen Mikrohohlkugeln eingesetzt werden und als sonstige Leichtzuschlagstoffe naturgemäß nur solche Leichtzuschlagstoffe in Frage kommen, die die Nachteile keramischer Mikrohohlkugeln nicht aufweisen, insbesondere so stabil sind, dass es beim Einarbeiten in die Baustoffzusammensetzung und Verarbeiten der Baustoffzusammensetzung nicht zu einer mechanischen Zerkleinerung und Bildung scharfkantiger Bruchstücke kommen kann.

Ist die erfindungsgemäße Baustoffzusammensetzung als 1-K-Pulversystem oder als Mehrkomponenten-system mit mindestens einer Pulverkomponente formuliert, kann die Baustoffzusammensetzung bzw. die Pulverkomponente im trockenen Zustand zu beträchtlicher Staubbildung neigen. Dies gilt insbesondere, wenn die entsprechende Zusammensetzung größere Mengen des anorganischen Bindemittels enthält. Zur Vermeidung unerwünschter Staubentwicklung können die entsprechenden Zusammensetzungen daher weiterhin mindestens ein Additiv zur Verminderung des Staubens (synonym auch als "Staubminderungsmittel", "Staubminderungsadditv" oder "Entstaubungsadditiv" bezeichnet) enthalten. Vorzugsweise kommen dabei Entstaubungsadditive auf Basis von Kohlenwasserstoffen oder Kohlenwasserstoffgemischen zum Einsatz. Diese bewirken eine Langzeitentstaubung in Bezug auf die hiermit behandelten Zusammensetzungen, welche sowohl bei geschlossener Lagerung als auch bei offener Lagerung, insbesondere unter Luftsauerstoff, erhalten bleibt.

Vorteilhafterweise werden unter Normalbedingungen (d. h. 25 °C und Atmosphärendruck) flüssige Kohlenwasserstoffe oder Kohlenwasserstoffgemische als Entstaubungsadditive eingesetzt. Dies hat zum einen den Vorteil, dass sich flüssige Anwendungsformen besser auf die zu entstaubenden Zusammensetzungen applizieren lassen und der Auftrag homogener ist als im Falle fester Entstaubungsadditive und man zudem mit geringeren Mengen als im Falle fester Entstaubungsadditive auskommt. Auch ist die Adhäsion bzw. Anfangshaftung flüssiger Additive oder Additivgemische im Vergleich zu festen Formen in Bezug auf die zu behandelnden Zusammensetzungen verbessert. Daher werden bevorzugt unter Normalbedingungen flüssige Kohlenwasserstoffe bzw. Kohlenwasserstoffgemische als Entstaubungsadditive eingesetzt.

Als erfindungsgemäß einsetzbare Entstaubungsadditive auf Basis von Kohlenwasserstoffen oder Kohlenwasserstoffgemischen werden insbesondere aliphatische Kohlenwasserstoffe oder Kohlenwasserstoffgemische, insbesondere lineare oder verzweigte, vorzugsweise lineare, gesättigte oder ungesättigte Kohlenwasserstoffe oder Kohlenwasserstoffgemische, vorzugsweise gesättigte aliphatische Kohlenwasserstoffe oder Kohlenwasserstoffgemische, eingesetzt. Die bevorzugt eingesetzten aliphatischen Kohlenwasserstoffe oder Kohlenwasserstoffgemische können jedoch gewisse aromatische Anteile, insbesondere aromatische Kohlenwasserstoffe, enthalten; dies ist insbesondere dann der Fall, wenn technische Kohlenwasserstoffe oder Kohlenwasserstoffgemische zur Anwendung kommen, z. B. technische Mineralöle, die oftmals aromatische Anteile enthalten. In einem solchen Fall sollte der Aromatenanteil, bezogen auf die eingesetzten Gesamtkohlenwasserstoffe oder Gesamtkohlenwasserstoffgemische, vorteilhafterweise 30 Gew.-%, vorzugsweise 20 Gew.-%, bevorzugt 17,5 Gew.-%, besonders bevorzugt 15 Gew.-%, nicht überschreiten.

Die als Entstaubungsadditive eingesetzten Kohlenwasserstoffe oder Kohlenwasserstoffgemische, insbesondere aliphatische Kohlenwasserstoffe oder Kohlenwasserstoffgemische (gegebenenfalls mit aromatischen Anteilen, wie zuvor definiert), weisen vorzugsweise Siedepunkte oder Siedebereiche in der Größenordnung von 100 bis 400 °C, insbesondere 150 bis 350 °C, vorzugsweise 200 bis 300 °C, auf, jeweils bezogen auf Atmosphärendruck. Derartige Kohlenwasserstoffe oder Kohlenwasserstoffgemische, insbesondere aliphatische Kohlenwasserstoffe oder Kohlenwasserstoffgemische (gegebenenfalls mit aromatischen Anteilen, wie zuvor definiert), lassen sich als Entstaubungsadditive gut mit den Zusammensetzungen verarbeiten und weisen eine nur äußerst geringe Flüchtigkeit auf, so dass eine Langzeitentstaubungswirkung erzielt wird und keine nennenswerten Mengen an Entstaubungsadditiv über eine gewisse Lagerzeit verflüchtigt werden. Die vorgenannten Siedepunkte oder Siedebereiche beziehen sich insbesondere auf die unter Normalbedingungen (25 °C und Atmosphärendruck) flüssigen Kohlenwasserstoffe oder Kohlenwasserstoffgemische in der als Entstaubungsadditiv eingesetzten Gesamtmischung.

Bei den in den erfindungsgemäßen Zusammensetzungen oder deren Pulverkomponente(n) eingesetzten Kohlenwasserstoffen oder Kohlenwasserstoffgemischen handelt es sich vorzugsweise um Kohlenwasserstoffe mit einer Kohlenstoffanzahl zwischen 10 und 40, bevorzugt zwischen 15 und 30.

Bevorzugt eingesetzte Kohlenwasserstoffe oder Kohlenwasserstoffgemische weisen Dichten im Bereich von 800 bis 900 kg/m³, insbesondere 825 bis 875 kg/m³, auf.

Bevorzugt ist es zudem, wenn die als Entstaubungsadditive eingesetzten Kohlenwasserstoffe oder Kohlenwasserstoffgemische bei einer Temperatur von 107 °C einen Verdampfungsverlust über 24 Stunden von weniger als 5 Gew.-%, vorzugsweise von weniger als 2 Gew.-%, besonders bevorzugt von weniger als 1 Gew.-%, bezogen auf die Kohlenwasserstoffe oder Kohlenwasserstoffgemische, aufweisen. Auf diese Weise wird gewährleistet, dass einerseits eine Langzeitentstaubung erreicht wird und andererseits die behandelten Zusammensetzungen zumindest im wesentlichen geruchsfrei bzw. geruchsarm sind, da Kohlenwasserstoffe oder Kohlenwasserstoffgemische allenfalls in geringsten Mengen freigesetzt werden.

Die Entstaubungsadditive auf Basis von Kohlenwasserstoffen bzw. Kohlenwasserstoffgemischen können im allgemeinen in Mengen von 0,01 bis 10 Gew.-%, insbesondere 0,01 bis 5 Gew.-%, bevorzugt 0,1 bis 5 Gew.-%, besonders bevorzugt 0,25 bis 3 Gew.-%, jeweils bezogen auf das Gesamtgewicht der Baustoffzusammensetzung, eingesetzt werden. Die vorstehenden Untergrenzen sind insbesondere dadurch begründet, dass ein nennenswerter Entstaubungseffekt erzielt werden soll, während die Obergrenzen einerseits durch die Verarbeitungs- bzw. Anwendungseigenschaften und andererseits durch ökonomische Erwägungen, auch im Hinblick auf eine technische Realisierbarkeit, bedingt sind. Dennoch kann es anwendungsbedingt oder einzelfallabhängig gegebenenfalls erforderlich oder gewünscht sein, von den vorgenannten Werten abzuweichen, was im Ermessen des Fachmanns liegt.

Des weiteren betrifft die vorliegende Erfindung - gemäß einem zweiten Aspekt der vorliegenden Erfindung - die Verwendung einer wie zuvor definierten Baustoffzusammensetzung nach der vorliegenden Erfindung für die Bauwerksabdichtung, insbesondere zum Abdichten und/oder zum Schutz von erdberührten Bauwerken und Bauteilen sowie von Dächern, insbesondere Flachdächern, oder zur dekorativen Bauwerksabdichtung, insbesondere von Bauwerksteilen, die nach Fertigstellung des Bauwerks sichtbar bleiben.

Weiterhin betrifft die vorliegende Erfindung - gemäß einem dritten Aspekt der vorliegenden Erfindung - ein Verfahren zum Abdichten und/oder zum Schutz von Bauwerken oder von Bauteilen einschließlich Dächern, wobei eine wie zuvor definierte Baustoffzusammensetzung nach der vorliegenden Erfindung auf die betreffenden Bauwerke oder Bauteile in einer Schichtdicke im nassen Zustand von 0,1 bis 10 mm, insbesondere 1 bis 5 mm, vorzugsweise 2 bis 4,5 mm, appliziert und nachfolgend abtrocknen und aushärten gelassen wird.

Im Rahmen der erfindungsgemäßen Verwendung und im Rahmen des erfindungsgemäßen Verfahrens wird die erfindungsgemäße Baustoffzusammensetzung im allgemeinen mit einer Schichtdicke (Nassdicke) von 0,1 bis 10 mm, insbesondere 1 bis 5 mm, vorzugsweise 2 bis 4,5 mm, appliziert.

Weitere Ausführungsformen, Ausgestaltungen, Abwandlungen und Variationen der vorliegenden Erfindung sind für den Fachmann beim Lesen der vorliegenden Anmeldung ohne weiteres erkennbar und realisierbar, ohne dass er dabei den Rahmen der vorliegenden Erfindung verlässt.

Im Folgenden wird die Erfindung anhand von Beispielen näher erläutert, wobei die Beispiele lediglich der Illustration der Erfindung dienen und keine Einschränkung des Erfindungsgedankens darstellen.

### Beispiele

Bei den im Folgenden angegebenen Mengenangaben handelt es sich - soweit nichts anderes vermerkt ist - um Gewichtsprozent.

### Beispiele 1 bis 60:

Bitumenfreie Baustoffzusammensetzungen nach der vorliegenden Erfindung werden als Zweikomponenten-Systeme (2K-System) wie folgt formuliert:

**Komponente (A) (Flüssigkomponente):**

| Inhaltsstoff | A1 | A2 | A3 | A4 | A5 | A6 |
|---|---|---|---|---|---|---|
| Polymerdispersion | | | | | | |
| Acronal A 378 (wässrige Butylacrylat/Acrylnitril-Copolymer-Dispersion, Feststoffgehalt ca. 61-63 %; BASF) | | | | | 81 | |
| Vinagen LAS 4055 ZF (wässrige Styrol/Acrylat-Copolymer-Dispersion, Feststoffgehalt ca. 55 %; BASF) | 85 | | | | | |
| Mowilith LDM 6482 (wässrige Styrol/Acrylat-Copolymer-Dispersion, Feststoffgehalt ca. 57 %; Celanese) | | | 75 | | | |
| Revacryl 123 (wässrige Styrol/Acrylat-Copolymer-Dispersion, Feststoffgehalt ca. 59-61 %; Synthomer) | | 72 | | | | |
| Lipaton XA 491 (wässrige Styrol/Butylacrylat-Copolymer-Dispersion, Feststoffgehalt ca. 57 %; Polymerlatex) | | | | 73 | | |
| Lipaton SB 3040 (wässrige Styrol/Butadien-Copolymer-Dispersion, Feststoffgehalt ca. 66 %; Polymerlatex) | | | | | | 80 |
| Polystyrolpartikel | | | | | | |
| Expandierte Polystyrolperlen (Dichte 13 g/l) | 1,2 | 1,5 | 1,3 | 1,4 | 1,5 | 1,3 |
| Synthetische Mikrohohlkugeln | | | | | | |
| Expancel 551 WE (Akzo Nobel) | 2 | | | 3 | | 2 |
| Expancel 461 WE (Akzo Nobel) | | 3 | | | 2,5 | |
| Expancel 091 WE (Akzo Nobel) | | | 3,5 | | | |
| Netzmittel (wässrige Lösung eines Natriumpolyacrylats) | | | | | | |
| Hydropalat N (Feststoffgehalt ca. 40 %; Cognis) | 2 | | | | | |
| Pigmentverteiler NL (Feststoffgehalt ca. 34-36 %; BASF) | | | 3,5 | | | |
| Lopon 890 (Feststoffgehalt ca. 44-46 %; BK Giulini) | | 3 | | 2,5 | 3 | |
| Nichtionischer Entschäumer | | | | | | |
| Etingal L (BASF) | 0,1 | | | 0,1 | | 0,1 |
| Byk 012 (Byk) | | | 0,3 | | | |
| Foamaster 306 (Cognis) | | 0,5 | | | 1 | |
| Konservierungsmittel | | | | | | |
| Grotan BK (Schülke & Mayr) | | | | 0,1 | | |
| Parmetol A28S (Schülke & Mayr) | 0,1 | | | | | |
| Acticide MV (Thor) | | 0,02 | 0,02 | | 0,02 | |
| Acticide L30 (Thor) | | 0,04 | 0,04 | | 0,04 | |
| Verdickungsmittel I | | | | | | |
| Synthomer 9523 (wässrige Butadien/Styrol-Copolymer-Dispersion, Feststoffgehalt ca. 35 %; Synthomer) | | | | 0,4 | | 0,3 |
| Latekoll DS 6269 (wässrige Polyacrylat-Dispersion, Feststoffgehalt ca. 29-32 %; BASF) | 0,5 | 0,5 | | | | |
| Latekoll D (wässrige Acrylsäureester-Copolymer-Dispersion, Feststoffgehalt ca. 24-26 %; BASF) | | | 0,5 | | | |
| Rohagit SD 15 (wässrige Ethylacrylat/Methacrylsäure-Copolymer-Dispersion, Feststoffgehalt ca. 30 %; Polymerlatex) | | | | | 0,5 | |
| Verdickungsmittel II | | | | | | |
| Rheolate 266 (Polyurethan, Aktivstoffgehalt ca. 20 %; Elementis) | | | 0,25 | | | |
| Weichmacher | | | | | | |
| Benzoflex 2088 (Genovique) | | 3 | | | | |
| Pluriol P900 (BASF) | | | 2 | | | |
| Base | | | | | | |
| 10%ige wässrige KOH-Lösung | | 0,5 | | | 0,5 | |
| 10%ige wässrige NaOH-Lösung | 1,5 | | | | | |
| Wasser | ad 100 | ad 100 | ad 100 | ad 100 | ad 100 | ad 100 |
| Dichte A-Komponente g/l (23°C) | 0,6 | 0,5 | 0,6 | 0,5 | 0,5 | 0,6 |

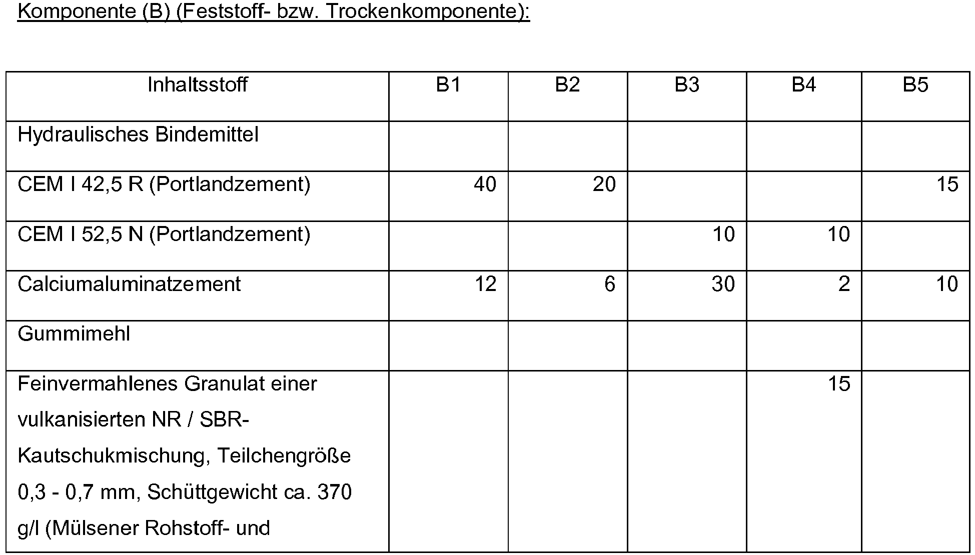

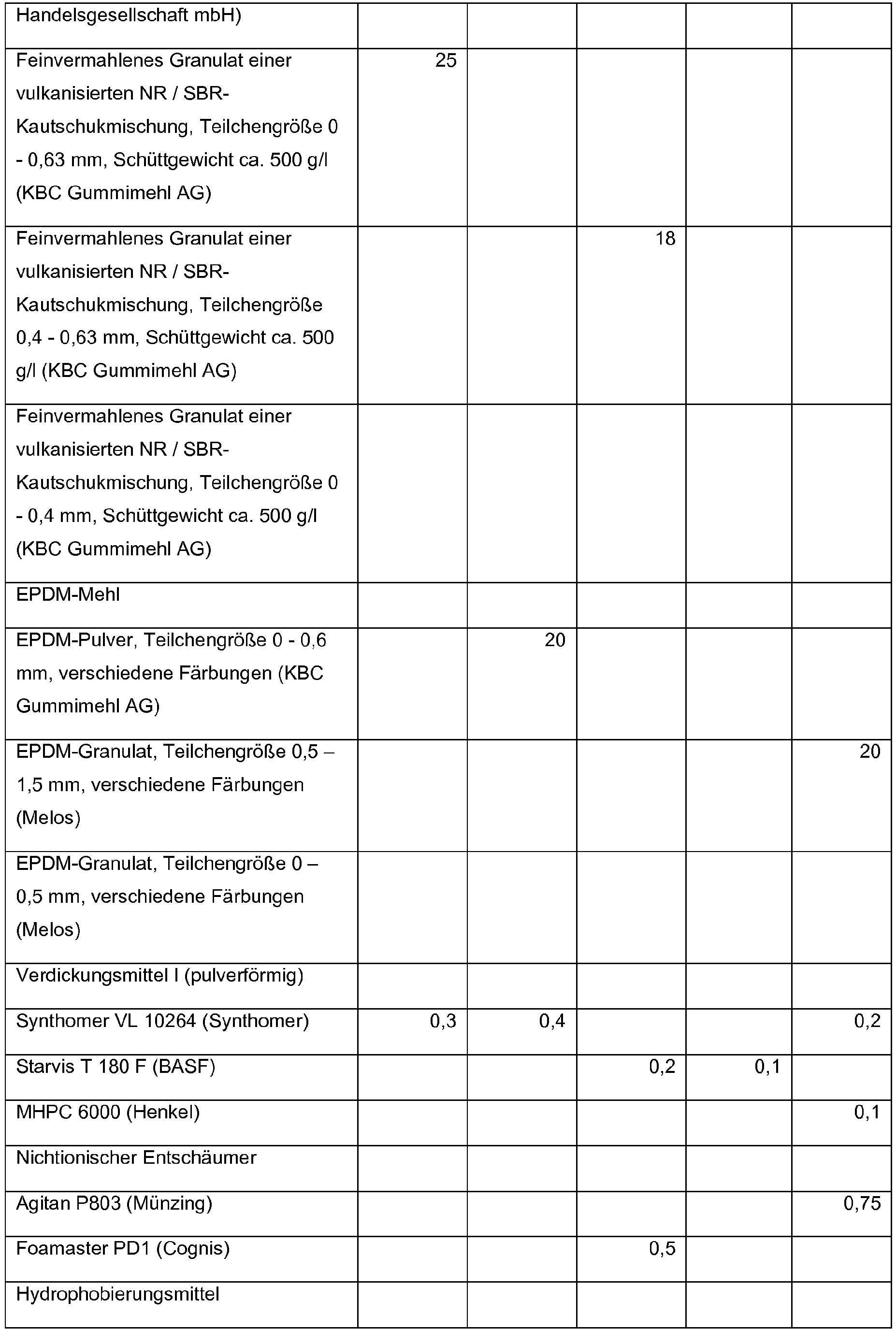

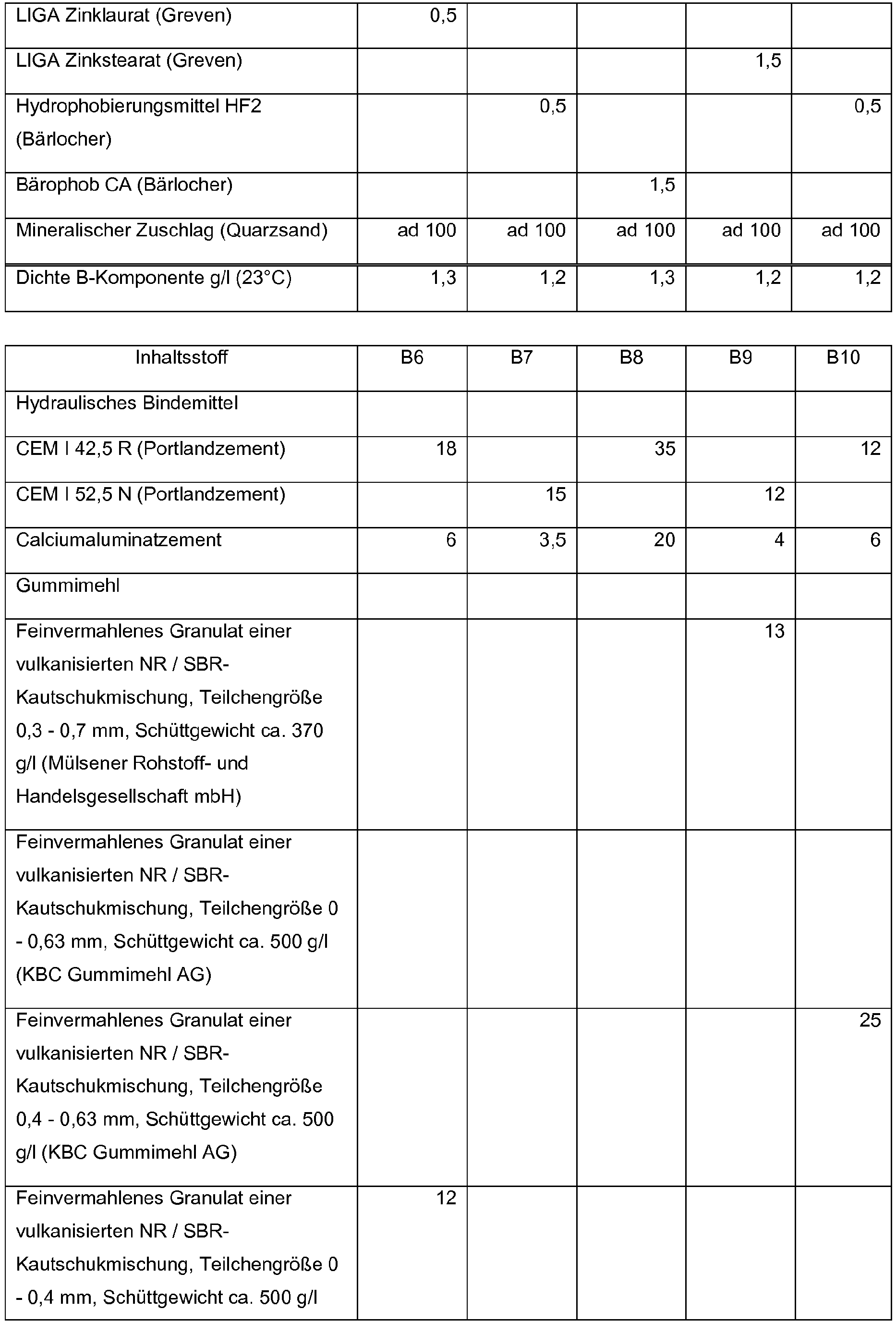

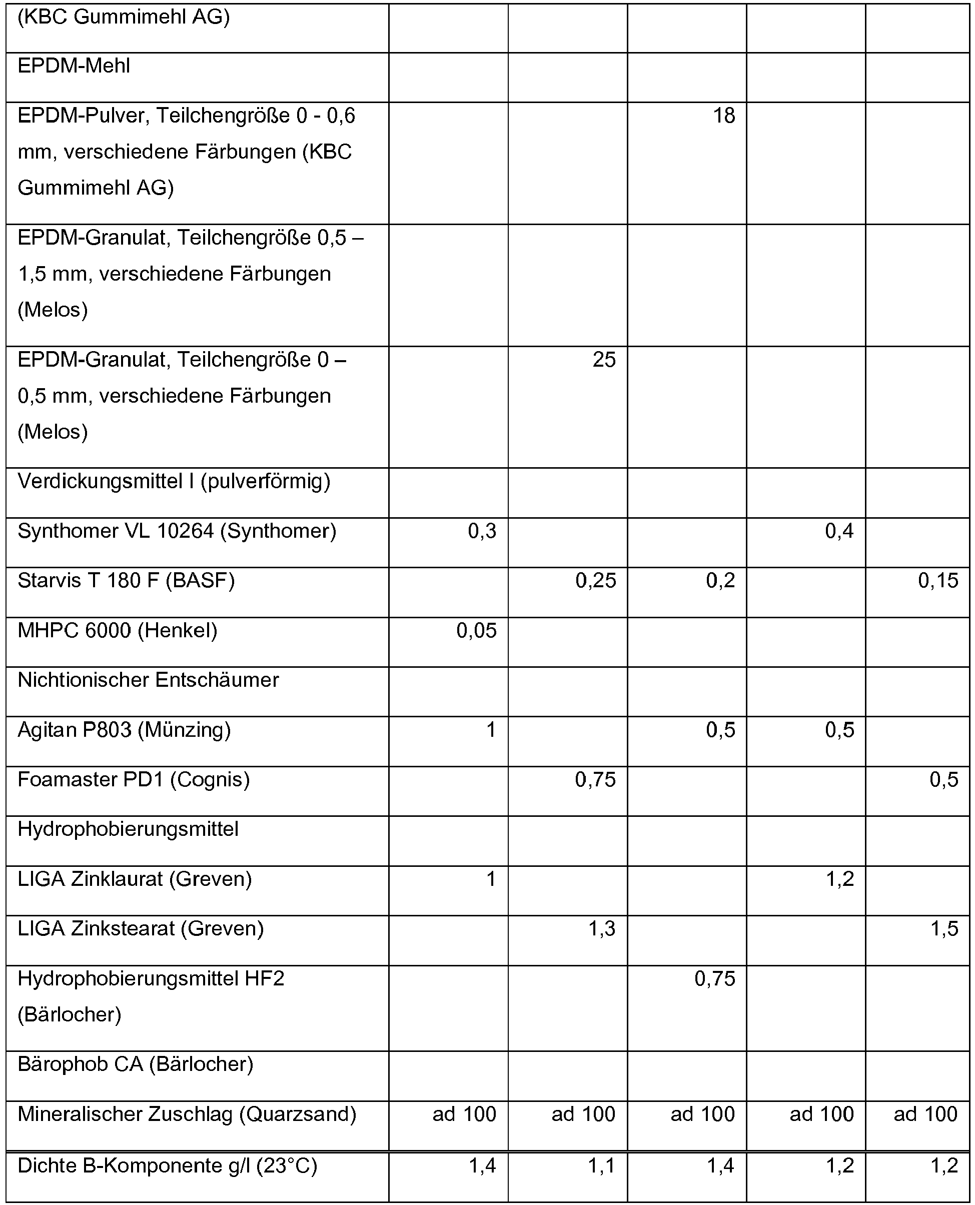

Die Dichten der Komponenten (A) und (B) sind in der jeweiligen Tabelle angegeben. Die Dichten der Feststoffkomponenten (B) betragen in allen Fällen mindestens das 1,7fache, in der Regel mindestens das 2fache der Dichten der Flüssigkomponenten (A).

Die zuvor genannten Komponenten (A) und (B) werden in einem Mischungsverhältnis (A): (B) (Gewichtsverhältnis) von etwa 1 : 1 vermischt, so dass eine homogene Mischung resultiert. Dabei kann jede der beschriebenen Flüssigkomponenten A1 bis A6 mit jeder der beschriebenen Feststoffkomponenten B1 bis B10 vermischt werden, so dass 60 erfindungsgemäße Baustoffzusammensetzungen resultieren.

Die jeweilige homogene Mischung wird auf eine senkrechte Wandfläche mit einer Schichtdicke von etwa 4 mm im nassen Zustand aufgetragen. Nach Abtrocknen und Aushärten resultiert eine gleichermaßen etwa 4 mm dicke, rissfreie, kohärente Abdichtschicht, welche die Wandfläche vor Feuchtigkeitseinwirkung schützt. Die Abdichtfläche ist frei von jeglicher Rissbildung.

Werden in obigen Zusammensetzungen die Polystyrolpartikel oder die Teilchen aus vulkanisiertem Kautschuk weggelassen, so resultieren Mischungen, die nach Auftrag auf eine senkrechte Wandfläche entsprechend obigem Vorgehen eine Rissbildung infolge ausgeprägter Schrumpfung zeigen. Werden in obigen Zusammensetzungen die synthetischen Mikrohohlkugeln weggelassen, wird zwar keine Rissbildung beobachtet, die Schrumpfung fällt jedoch stärker aus als bei entsprechenden erfindungsgemäßen Baustoffzusammensetzungen. Die abgetrockneten und ausgehärteten Abdichtschichten weisen in allen Fällen, in denen auf eine erfindungsgemäße Komponente verzichtet wurde, infolge der Schrumpfung eine geringere Dicke jeweils deutlich unterhalb von 4 mm auf.

Anstelle der eingesetzten Kunststoffdispersionen kann in obigen Zusammensetzungen alternativ ein entsprechendes Redispersionspulver eingesetzt werden, welches vor Anwendung dann mit der entsprechenden Wassermenge angemacht werden muss. Dieses kann der Komponente (B) zugegeben werden. Die Verwendung eines Redispersionspulvers ermöglicht aber auch die Formulierung als Einkomponenten-System (1K-System), sofern alle übrigen Komponenten als Trockenbestandteile ausgewählt werden.

## Patentansprüche

1. Baustoffzusammensetzung, wobei die Baustoffzusammensetzung
- mindestens eine Polymerdispersion oder ein entsprechendes Redispersionspulver,
- Polystyrolpartikel,
- Teilchen aus vulkanisiertem Naturkautschuk, vulkanisiertem synthetischen Kautschuk, thermoplastischem Kautschuk oder Mischungen davon und
- auf Basis von organischen Polymeren ausgebildete synthetische Mikrohohlkugeln
enthält und wobei die Baustoffzusammensetzung Bitumen und keramische Mikrohohlkugeln maximal in einer Menge von 10 ppm enthält.

2. Baustoffzusammensetzung nach Anspruch 1, **dadurch gekennzeichnet, dass** die Polymerdispersion oder das entsprechende Redispersionspulver auf Basis von vinyl-, (meth-)acryl-, styrol-, butadien- und/oder ethylenbasierten Polymeren aufgebaut ist.

3. Baustoffzusammensetzung nach mindestens einem der Ansprüche 1 bis 2, **dadurch gekennzeichnet,**
• **dass** die Polymerdispersion eine Kunststoffdispersion, insbesondere eine nichtepoxidharzbasierte Kunststoffdispersion, ist und/oder
• **dass** die Polymerdispersion ionisch modifiziert ist und/oder
• **dass** die Polymerdispersion einen Feststoffgehalt von 30 bis 75 Gew.-%, insbesondere 45 bis 70 Gew.-%, bevorzugt 55 bis 65 Gew.-%, bezogen auf die Polymerdispersion, aufweist und/oder
• **dass** die Polymerpartikel der Polymerdispersion Teilchengrößen, insbesondere mittlere Teilchengrößen, von 0,001 bis 5 µm, insbesondere 0,01 bis 3 µm, vorzugsweise 0,05 bis 2 µm, besonders bevorzugt 0,1 bis 1,0 µm, aufweisen und/oder
• **dass** die Polymerdispersion als ein wässrig basiertes Dispersionssystem formuliert ist und/oder
• **dass** die Polymerdispersion eine Dispersion auf Basis von (Meth-)Acrylat-Copolymeren, Styrol/(Meth-)Acrylat-Copolymeren, Styrol/Butadien-Copolymeren und/ oder Vinylacetat/Ethylen-Copolymeren, bevorzugt auf Basis von Styrol/(Meth-)Acrylat-Copolymeren, ist und/oder dass das Redispersionspulver ein Redispersionspulver auf Basis von (Meth-)Acrylat-Copolymeren, Styrol/(Meth-)-Acrylat-Copolymeren, Styrol/Butadien-Copolymeren und/oder Vinylacetat/Ethylen-Copolymeren, bevorzugt auf Basis von Styrol/(Meth-)Acrylat-Copolymeren, ist.

4. Baustoffzusammensetzung nach mindestens einem der Ansprüche 1 bis 3, **dadurch gekennzeichnet,**
• **dass** die Polystyrolpartikel aus expandierbarem und/oder expandiertem und/oder extrudiertem Polystyrol gebildet sind, insbesondere wobei das expandierbare Polystyrol mindestens ein Treibmittel, vorzugsweise ein Alkan, insbesondere Pentan und/oder Pentanisomere, enthält und/oder
• **dass** die Polystyrolpartikel als Polystyrolperlen oder Polystyrolkügelchen oder als Polystyrolgranulat vorliegen und/oder
• **dass** die Polystyrolpartikel Teilchengrößen von 0,1 bis 3,0 mm, insbesondere 0,2 bis 2,0 mm, vorzugsweise 0,5 bis 1,5 mm, aufweisen und/oder
• **dass** die Polystyrolpartikel Schüttdichten von 5 bis 30 g/l, insbesondere 7,5 bis 15 g/l, vorzugsweise 10 bis 13 g/l, aufweisen.

5. Baustoffzusammensetzung nach mindestens einem der Ansprüche 1 bis 4, **dadurch gekennzeichnet, dass** die Teilchen aus vulkanisiertem Naturkautschuk, vulkanisiertem synthetischen Kautschuk, thermoplastischem Kautschuk oder Mischungen davon ausgewählt sind aus
• Teilchen aus vulkanisiertem Naturkautschuk (NR) und/oder
• Teilchen aus vulkanisiertem synthetischen Kautschuk ausgewählt aus StyrolButadien-Kautschuk (SBR), Ethylen-Propylen-Elastomeren (EPM und EPDM), Butylkautschuk (IIR), Nitrilkautschuk (NBR), Isoprenkautschuk (IR), Polybutadienkautschuk (BR), Polychloropren (CR) und/oder Ethylen-Vinylacetat-Copolymeren (EVA) und/oder
• Teilchen aus thermoplastischem Kautschuk ausgewählt aus Styrol-Butadien-Styrol-Copolymeren (SBS), Styrol-Isopren-Styrol-Copolymeren (SIS), Styrol-Ethylenbutylen-Styrol-Copolymeren (SEBS), thermoplastischen Olefinen und/oder den Elastomerlegierungen aus vernetztem EPDM und Propylen (EPDM/PP), aus vernetztem Naturkautschuk und Propylen (NR/PP), aus Ethylenvinylacetat und Vinylidenchlorid (EVA/PVDC), aus vernetztem Nitrilkautschuk und Propylen (NBR/PP) und/oder
• Teilchen aus Gemischen der genannten Kautschuktypen.

6. Baustoffzusammensetzung nach mindestens einem der Ansprüche 1 bis 5, **dadurch gekennzeichnet, dass** es sich bei den Teilchen aus vulkanisiertem Naturkautschuk, vulkanisiertem synthetischen Kautschuk, thermoplastischem Kautschuk oder Mischungen davon um entsprechende Pulver und/oder Granulate mit Teilchengrößen von 0,01 bis 3,0 mm, bestimmt mittels Siebanalyse, handelt.

7. Baustoffzusammensetzung nach mindestens einem der Ansprüche 1 bis 6, **dadurch gekennzeichnet, dass** es sich bei den Teilchen aus vulkanisiertem Naturkautschuk, vulkanisiertem synthetischen Kautschuk, thermoplastischem Kautschuk oder Mischungen davon um feinvermahlenes Granulat einer vulkanisierten NR/SBR-Kautschukmischung und/oder einer vulkanisierten EPM/EPDM-Kautschukischung handelt, wobei die Teilchen vorzugsweise Teilchengrößen von 0,01 bis 1,5 mm, besonders bevorzugt Teilchengrößen von 0,01 bis 0,7 mm, jeweils bestimmt mittels Siebanalyse, aufweisen.

8. Baustoffzusammensetzung nach mindestens einem der Ansprüche 1 bis 7, **dadurch gekennzeichnet, dass** die Baustoffzusammensetzung die Teilchen aus vulkanisiertem Naturkautschuk, vulkanisiertem synthetischen Kautschuk, thermoplastischem Kautschuk oder deren Mischungen in einer Menge von 0,01 bis 50 Gew.-%, vorzugsweise 1 bis 30 Gew.-%, besonders bevorzugt 5 bis 30 Gew.-% und ganz besonders bevorzugt 10 bis 25 Gew.-%, jeweils bezogen auf das Gesamtgewicht der Baustoffzusammensetzung, enthält.

9. Baustoffzusammensetzung nach mindestens einem der Ansprüche 1 bis 8, **dadurch gekennzeichnet,**
• **dass** die auf Basis von organischen Polymeren ausgebildeten synthetischen Mikrohohlkugeln aus organischen Polymeren auf Basis von Monomeren aus der Gruppe von Vinylidenchlorid, Acrylnitril und/oder Methyl(meth)acrylaten, vorzugsweise aus Vinylidenchlorid/Acrylnitril-Copolymeren, oder aus Phenolharzen aufgebaut sind, und/oder
• **dass** die synthetischen Mikrohohlkugeln Teilchengrößen von 1 bis 300 µm, insbesondere 1 bis 200 µm, vorzugsweise 5 bis 150 µm, besonders bevorzugt 5 bis 100 µm, aufweisen und/oder
• **dass** die synthetischen Mikrohohlkugeln mittlere Teilchengrößen von 10 bis 100 µm, insbesondere 20 bis 80 µm, vorzugsweise 20 bis 60 µm, aufweisen und/oder
• **dass** die synthetischen Mikrohohlkugeln einen Feststoffgehalt von 5 bis 20 Vol.-%, insbesondere 7 bis 17 Vol.-%, bezogen auf die Mikrohohlkugeln, aufweisen und/oder
• **dass** die synthetischen Mikrohohlkugeln in expandierbarer und/oder expandierter Form vorliegen, insbesondere wobei die synthetischen Mikrohohlkugeln mindestens ein Treibmittel, vorzugsweise ein Alkan, insbesondere Pentan und/oder Pentanisomere, enthalten.

10. Baustoffzusammensetzung nach mindestens einem der Ansprüche 1 bis 9, **dadurch gekennzeichnet, dass** die Baustoffzusammensetzung weiterhin mindestens ein anorganisches Bindemittel enthält.

11. Baustoffzusammensetzung nach Anspruch 10, **dadurch gekennzeichnet,**
• **dass** das anorganische Bindemittel ein hydraulisches, latenthydraulisches oder nichthydraulisches Bindemittel, insbesondere ein hydraulisches Bindemittel, ist und/oder
• **dass** das anorganische Bindemittel aus der Gruppe von Zementen; Kalk; Weißkalk; Calciumsulfaten, wie Anhydrit und Gips; Schlacken, wie Hochofenschlacken; Filteraschen; und deren Mischungen ausgewählt ist und vorzugsweise ein Zement, insbesondere eine Mischung aus Portlandzement und Calciumaluminatzement, ist.

12. Baustoffzusammensetzung nach mindestens einem der Ansprüche 10 bis 11, **dadurch gekennzeichnet, dass** die Baustoffzusammensetzung als Zweikomponenten-System (2K-System) formuliert ist, wobei Polymerdispersion einerseits und anorganisches Bindemittel andererseits in unterschiedlichen Komponenten vorliegen.

13. Baustoffzusammensetzung nach mindestens einem der Ansprüche 1 bis 12, **dadurch gekennzeichnet, dass** die Baustoffzusammensetzung als Zweikomponenten-System (2K-System) formuliert ist, wobei das Zweikomponenten-System einerseits eine Komponente (A) als Flüssigkomponente, und andererseits eine Komponente (B) umfasst,
• wobei die Komponente (A), jeweils mengenbezogen auf die Komponente (A),
- mindestens eine Polymerdispersion, insbesondere in Mengen von 2 bis 95 Gew.-%, vorzugsweise 40 bis 95 Gew.-%, besonders bevorzugt 70 bis 95 Gew.-%,
- Polystyrolpartikel, insbesondere in Mengen von 0,01 bis 10 Gew.-%, vorzugsweise 0,05 bis 5 Gew.-%, besonders bevorzugt 1,0 bis 2,0 Gew.-%, und
- auf Basis von organischen Polymeren ausgebildete synthetische Mikrohohlkugeln, insbesondere in Mengen von 0,01 bis 50 Gew.-%, vorzugsweise 0,05 bis 15 Gew.-%, besonders bevorzugt 0,1 bis 5 Gew.-%,
enthält und
• wobei die Komponente (B), jeweils mengenbezogen auf die Komponente (B),
- mindestens ein anorganisches Bindemittel, vorzugsweise Zement, insbesondere in Mengen von 0,01 bis 95 Gew.-%, vorzugsweise 5 bis 60 Gew.-%, besonders bevorzugt 10 bis 55 Gew.-%, und
- Teilchen aus vulkanisiertem Naturkautschuk, vulkanisiertem synthetischen Kautschuk, thermoplastischem Kautschuk oder deren Mischungen, insbesondere in Mengen von 0,01 bis 90 Gew.-%, vorzugsweise 1 bis 60 Gew.-%, besonders bevorzugt 5 bis 30 Gew.-% und ganz besonders bevorzugt 10 bis 25 Gew.-%,
enthält.

14. Verwendung einer Baustoffzusammensetzung nach einem der Ansprüche 1 bis 13 zur Bauwerksabdichtung, insbesondere zum Abdichten und/oder zum Schutz von erdberührten Bauwerken oder Bauteilen oder von Dächern.

15. Verfahren zum Abdichten und/oder zum Schutz von Bauwerken oder Bauteilen, **dadurch gekennzeichnet, dass** eine Baustoffzusammensetzung nach einem der Ansprüche 1 bis 13 auf die betreffenden Bauwerke oder Bauteile in einer Schichtdicke im nassen Zustand von 0,1 bis 10 mm, insbesondere 1 bis 5 mm, vorzugsweise 2 bis 4,5 mm, appliziert wird und nachfolgend abtrocknen und aushärten gelassen wird.

## Claims

1. A building material composition, wherein the building material composition contains
- at least one polymer dispersion or a corresponding redispersion powder,
- polystyrene particles,
- particles of vulcanized natural rubber, vulcanized synthetic rubber, thermoplastic rubber or mixtures thereof, and
- synthetic hollow microbeads formed based on organic polymers
and wherein the building material composition contains bitumen and ceramic hollow microbeads at most in an amount of 10 ppm.

2. The building material composition according to claim 1, **characterized in that** the polymer dispersion or the corresponding redispersion powder is composed based on vinyl-, (meth)acryl-, styrene-, butadiene- and/or ethylene-based polymers.

3. The building material composition according to at least one of claims 1 to 2, **characterized in that**
• the polymer dispersion is a plastics dispersion, in particular a non-epoxy-resin-based plastics dispersion, and/or
• the polymer dispersion is ionically modified, and/or
• the polymer dispersion has a solids content of from 30 to 75 wt.%, in particular 45 to 70 wt.%, preferably 55 to 65 wt.%, based on the polymer dispersion, and/or
• the polymer particles of the polymer dispersion have particle sizes, in particular average particle sizes, of from 0.001 to 5 µm, in particular 0.01 to 3 µm, preferably 0.05 to 2 µm, particularly preferably 0.1 to 1.0 µm, and/or
• the polymer dispersion is formulated as an aqueous-based dispersion system, and/or
• the polymer dispersion is a dispersion based on (meth-)acrylate copolymers, styrene/(meth-)acrylate copolymers, styrene/butadiene copolymers and/or vinyl acetate/ethylene copolymers, preferably based on styrene/(meth-)acrylate copolymers, and/or the redispersion powder is a redispersion powder based on (meth-)acrylate copolymers, styrene/(meth-)acrylate copolymers, styrene/butadiene copolymers and/or vinyl acetate/ethylene copolymers, preferably based on styrene/(meth-)acrylate copolymers.

4. The building material composition according to at least one of claims 1 to 3, **characterized in that**
• the polystyrene particles are formed of expandable and/or expanded and/or extruded polystyrene, in particular the expandable polystyrene containing at least one propellant, preferably an alkane, in particular pentane and/or pentane isomers, and/or
• the polystyrene particles are present as polystyrene pellets or polystyrene beads or as polystyrene granulate, and/or
• the polystyrene particles have particle sizes of from 0.1 to 3.0 mm, in particular 0.2 to 2.0 mm, preferably 0.5 to 1.5 mm, and/or
• the polystyrene particles have bulk densities of from 5 to 30 g/l, in particular 7.5 to 15 g/l, preferably 10 to 13 g/l.

5. The building material composition according to at least one of claims 1 to 4, **characterized in that** the particles of vulcanized natural rubber, vulcanized synthetic rubber, thermoplastic rubber or mixtures thereof are selected from:
• particles of vulcanized natural rubber (NR) and/or
• particles of vulcanized synthetic rubber selected from styrene-butadiene rubber (SBR), ethylene-propylene elastomers (EPM and EPDM), butyl rubber (IIR), nitrile rubber (NBR), isoprene rubber (IR), polybutadiene rubber (BR), polychloroprene (CR) and/or ethylene-vinyl acetate copolymers (EVA), and/or
• particles of thermoplastic rubber selected from styrene-butadiene-styrene copolymers (SBS), styrene-isoprene-styrene copolymers (SIS), styrene-ethylenebutylene-styrene copolymers (SEBS), thermoplastic olefins and/or the elastomer alloys of crosslinked EPDM and propylene (EPDM/PP), of crosslinked natural rubber and propylene (NR/PP), of ethylene vinyl acetate and vinylidene chloride (EVA/PVDC), of crosslinked nitrile rubber and propylene (NBR/PP), and/or
• particles of mixtures of the mentioned types of rubber.

6. The building material composition according to at least one of claims 1 to 5, **characterized in that** the particles of vulcanized natural rubber, vulcanized synthetic rubber, thermoplastic rubber or mixtures thereof are corresponding powders and/or granulates having particle sizes of from 0.01 to 3.0 mm, determined by means of sieve analysis.

7. The building material composition according to at least one of claims 1 to 6, **characterized in that** the particles of vulcanized natural rubber, vulcanized synthetic rubber, thermoplastic rubber or mixtures thereof are finely-ground granulate of a vulcanized NR/SBR rubber mixture and/or a vulcanized EPM/EPDM rubber mixture, the particles preferably having particle sizes of from 0.01 to 1.5 mm, particularly preferably particle sizes of from 0.01 to 0.7 mm, in each case determined by means of sieve analysis.

8. The building material composition according to at least one of claims 1 to 7, **characterized in that** the building material composition contains the particles of vulcanized natural rubber, vulcanized synthetic rubber, thermoplastic rubber or mixtures thereof in an amount of from 0.01 to 50 wt.%, preferably 1 to 30 wt.%, particularly preferably 5 to 30 wt.%, and most particularly preferably 10 to 25 wt.%, in each case based on the total weight of the building material composition.

9. The building material composition according to at least one of claims 1 to 8, **characterized in that**
• the synthetic hollow microbeads formed based on organic polymers are composed of organic polymers based on monomers from the group of vinylidene chloride, acryl nitrile and/or methyl(meth)acrylates, preferably of vinylidene chloride/acryl nitrile copolymers, or of phenol resins, and/or
• the synthetic hollow microbeads have particle sizes of from 1 to 300 µm, in particular 1 to 200 µm, preferably 5 to 150 µm, particularly preferably 5 to 100 µm, and/or
• the synthetic hollow microbeads have average particle sizes of from 10 to 100 µm, in particular 20 to 80 µm, preferably 20 to 60 µm, and/or
• the synthetic hollow microbeads have a solids content of from 5 to 20 vol.%, in particular 7 to 17 vol.%, based on the hollow microbeads, and or
• the synthetic hollow microbeads are present in expandable and/or expanded form, in particular the synthetic hollow microbeads containing at least one propellant, preferably an alkane, in particular pentane and/or pentane isomers.

10. The building material composition according to at least one of claims 1 to 9, **characterized in that** the building material composition also contains at least one inorganic binder.

11. The building material composition according to claim 10, **characterized in that**
• the inorganic binder is a hydraulic, latent-hydraulic or non-hydraulic binder, in particular a hydraulic binder, and/or
• the inorganic binder is selected from the group of cements, lime, white lime, calcium sulfates such as anhydrite and gypsum, slags such as blast furnace slags, filter ashes, and mixtures thereof, and is preferably a cement, in particular a mixture of Portland cement and calcium aluminate cement.

12. The building material composition according to at least one of claims 10 to 11, **characterized in that** the building material composition is formulated as a two-component system (2K system), polymer dispersion and inorganic binder being present in different components.

13. The building material composition according to at least one of claims 1 to 12, **characterized in that** the building material composition is formulated as a two-component system (2K system), the two-component system comprising a component (A) as a liquid component and a component (B),
• component (A) containing, in each case based on the amount of component (A),
- at least one polymer dispersion, in particular in amounts of from 2 to 95 wt.%, preferably 40 to 95 wt.%, particularly preferably 70 to 95 wt.%,
- polystyrene particles, in particular in amounts of from 0.01 to 10 wt.%, preferably 0.05 to 5 wt.%, particularly preferably 1.0 to 2.0 wt.%, and
- synthetic hollow microbeads formed based on organic polymers, in particular in amounts of from 0.01 to 50 wt.%, preferably 0.05 to 15 wt.%, particularly preferably 0.1 to 5 wt.%, and
• component (B) containing, in each case based on the amount of component (B),
- at least one inorganic binder, preferably cement, in particular in amounts of from 0.01 to 95 wt.%, preferably 5 to 60 wt.%, particularly preferably 10 to 55 wt.%, and
- particles of vulcanized natural rubber, vulcanized synthetic rubber, thermoplastic rubber or mixtures thereof, in particular in amounts of from 0.01 to 90 wt.%, preferably 1 to 60 wt.%, particularly preferably 5 to 30 wt.%, and most particularly preferably 10 to 25 wt.%.

14. The use of a building material composition according to one of claims 1 to 13 for construction waterproofing, in particular for waterproofing and/or protecting buildings or components that are in contact with the ground, or roofs.

15. A method for waterproofing and/or protecting buildings or components, **characterized in that** a building material composition according to one of claims 1 to 13 is applied to the building or component in question at a layer thickness in the wet state of from 0.1 to 10 mm, in particular 1 to 5 mm, preferably 2 to 4.5 mm, and subsequently allowed to dry and harden.

## Revendications

1. Composition de matériau de construction, la composition de matériau de construction contenant
- au moins une dispersion de polymère ou une poudre re-dispersive correspondante,
- des particules de polystyrène
- des particules de caoutchouc naturel vulcanisé, de caoutchouc synthétique vulcanisé, de caoutchouc thermoplastique ou de mélanges de ceux-ci et
- des microsphères creuses synthétiques formées sur la base de polymères organiques et la composition de matériau de construction contenant des bitumes et des microsphères creuses en céramique dans une quantité maximale de 10 ppm.

2. Composition de matériau de construction selon la revendication 1, **caractérisée en ce que** la dispersion de polymère ou la poudre re-dispersible correspondante est formée sur la base de polymères à base de vinyle, de (méth)acryle, de styrène, de butadiène et/ou d'éthylène.

3. Composition de matériau de construction selon l'une au moins des revendications 1 à 2, **caractérisée en ce que**
• la dispersion de polymère est une dispersion de matière plastique, en particulier une dispersion de matière plastique à base de résine non époxy, et/ou
• la dispersion de polymère est ioniquement modifiée et/ou
• la dispersion de polymère a une teneur en matières solides allant de 30 à 75 % en poids, en particulier de 45 à 70 % en poids, de préférence de 55 à 65 % en poids, sur la base de la dispersion de polymère, et/ou
• les particules de polymère de la dispersion de polymère ont des tailles de particules, en particulier des tailles de particules moyennes, allant de 0,001 à 5 µm, en particulier de 0,01 à 3 µm, de préférence de 0,05 à 2 µm, de manière particulièrement préférée de 0,1 à 1,0 µm, ont, et/ou
• la dispersion de polymère est formulée comme un système de dispersion à base aqueuse et/ou
• la dispersion de polymère est une dispersion à base de copolymères (méth)acrylate, copolymères styrène/(méth)acrylate, copolymères styrène/butadiène et/ou copolymères acétate de vinyle/éthylène, de préférence à base de copolymères styrène/(méth)acrylate et/ou la poudre re-dispersible est une poudre re-dispersible à base copolymères (méth)acrylate, copolymères styrène/(méth)acrylate, copolymères styrène/butadiène et/ou copolymères acétate de vinyle/éthylène, de préférence à base de copolymères styrène/(méth)acrylate.

4. Composition de matériau de construction selon l'une au moins des revendications 1 à 3, **caractérisée en ce que**
• les particules de polystyrène sont formées de polystyrène expansible et/ou expansé et/ou extrudé, en particulier le polystyrène expansible contenant moins un agent gonflant, de préférence un alcane, en particulier du pentane et/ou des isomères de pentane, et/ou
• les particules de polystyrène sont présents sous forme de perles de polystyrène ou de billes de polystyrène ou d'un granulat de polystyrène et/ou
• les particules de polystyrène ont des tailles de particules allant de 0,1 à 3,0 mm, en particulier de 0,2 à 2,0 mm, de préférence de 0,5 à 1,5 mm et/ou
• les particules de polystyrène ont des densités apparentes allant de 5 à 30 g/l, en particulier de 7,5 à 15 g/l, avantageusement de 10 à 13 g/l.

5. Composition de matériau de construction selon l'une quelconque des revendications 1 à 4, **caractérisée en ce que** les particules de caoutchouc naturel vulcanisé, de caoutchouc synthétique vulcanisé, de caoutchouc thermoplastique ou de mélanges de ceux-ci sont choisies parmi
• des particules de caoutchouc naturel vulcanisé (NR) et/ou
• des particules de caoutchouc synthétique vulcanisé choisi parmi le caoutchouc styrène-butadiène (SBR), les élastomères éthylène-propylène (EPM et EPDM), le caoutchouc butyle (IIR), le caoutchouc nitrile (NBR), le caoutchouc isoprène (IR), le caoutchouc polybutadiène (BR), le polychloroprène (CR) et/ou des copolymères éthylène-acétate de vinyle (EVA) et/ou
• des particules de caoutchouc thermoplastique choisi parmi les copolymères styrène-butadiène-styrène (SBS), les copolymères styrène-isoprène-styrène (SIS), les copolymères styrène-éthylène-butylène-styrène (SEBS), les oléfines thermoplastiques et/ou les alliages d'élastomère d'EPDM réticulé et de propylène (EPDM/PP), de caoutchouc naturel réticulé et de propylène (NR/PP), d'éthylène-acétate de vinyle, et de chlorure de vinylidène (EVA/PVDC), de caoutchouc nitrile réticulé et de propylène (NBR/PP) et/ou
• des particules de mélanges des types de caoutchouc mentionnés.

6. Composition de matériau de construction selon l'une des revendications 1 à 5, **caractérisé en ce que** les particules de caoutchouc naturel vulcanisé, de caoutchouc synthétique vulcanisé, de caoutchouc thermoplastique, ou de mélanges de ceux-ci sont des poudres correspondantes et/ou des granulés correspondantes ayant des tailles de particules allant de 0,01 à 3,0 mm, déterminées par analyse granulométrique.

7. Composition de matériau de construction selon l'une des revendications 1 à 6, **caractérisée en ce que** les particules de caoutchouc naturel vulcanisé, de caoutchouc synthétique vulcanisé, de caoutchouc thermoplastique, ou de mélanges de ceux-ci sont un granulat finement broyé d'un mélange de caoutchoucs NR/SBR vulcanisés et/ou d'un mélange de caoutchoucs EPM/EPDM vulcanisés, de préférence les particules ayant des tailles de particules allant de 0,01 à 1,5 mm, de manière particulièrement préférée des tailles de particules allant de 0,01 à 0,7 mm, déterminées à chaque fois par analyse granulométrique.

8. Composition de matériau de construction selon l'une au moins des revendications 1 à 7, **caractérisée en ce que** la composition de matériau de construction contient les particules de caoutchouc naturel vulcanisé, de caoutchouc synthétique vulcanisé, de caoutchouc thermoplastique, ou de mélanges de ceux-ci dans une quantité allant de 0,01 à 50 % en poids, de préférence de 1 à 30 % en poids, de manière particulièrement préférée de 5 à 30 % en poids et de manière tout particulièrement préférée de 10 à 25 % en poids, à chaque fois sur la base du poids total de la composition de matériau de construction.

9. Composition de matériau de construction selon l'une au moins des revendications 1 à 8, **caractérisée en ce que**
• les microsphères creuses synthétiques formées à base de polymères organiques sont constituées de polymères organiques à base de monomères du groupe formé par le chlorure de vinylidène, l'acrylonitrile et/ou les (méth)acrylates de méthyle, de préférence chlorure de vinylidène/acrylonitrile, ou de résines phénoliques et/ou
• les microsphères creuses synthétiques ont des tailles de particules allant de 1 à 300 µm, en particulier de 1 à 200 µm, de préférence de 5 à 150 µm, de manière particulièrement préférée de 5 à 100 µm et/ou
• les microsphères creuses synthétiques ont des tailles de particules moyennes allant de 10 à 100 µm, en particulier de 20 à 80 µm, de préférence de 20 à 60 µm, et/ou
• les microsphères creuses synthétiques ont une teneur en matières solides allant de 5 à 20 % en volume, en particulier de 7 à 17 % en volume, par rapport aux microsphères creuses, et/ou
• les microsphères creuses synthétiques sont présentes sous forme expansible et/ou expansée, en particulier les microsphères creuses synthétiques contenant au moins un agent gonflant, de préférence un alcane, en particulier du pentane et/ou des isomères de pentane.

10. Composition de matériau de construction selon l'une au moins des revendications 1 à 9, **caractérisée en ce que** la composition de matériau de construction contient en outre au moins un liant minéral.

11. Composition de matériau de construction selon la revendication 10, **caractérisée en ce que**
• le liant minéral est un liant hydraulique, hydraulique latent ou non hydraulique, en particulier un liant hydraulique, et/ou
• le liant minéral est choisi dans le groupe constitué de ciments ; de chaux ; de la chaux éteinte ; de sulfates de calcium tels que l'anhydrite et le gypse ; de laitiers, tels que des scories de haut fourneau ; de cendres de filtre ; et de mélanges de ceux-ci, et de préférence un ciment, en particulier un mélange de ciment Portland et de ciment d'aluminate de calcium.

12. Composition de matériau de construction selon l'une des revendications 10 à 11, **caractérisé en ce que** la composition de matériau de construction est formulée sous la forme d'un système à deux composants (système 2C), la dispersion de polymère d'une part et le liant minéral d'autre part étant présents dans différents composants.

13. Composition de matériau de construction selon l'une des revendications 1 à 12, **caractérisée en ce que** la composition de matériau de construction est formulée sous la forme d'un système à deux composants (système 2C), le système à deux composants comportant d'une part un composant (A) comme composant liquide et d'autre part un composant (B),
• le composant (A) contenant à chaque dans un rapport quantitatif au composant (A),
- au moins une dispersion de polymère, en particulier dans des quantités allant de 2 à 95 % en poids, de préférence de 40 à 95 % en poids, de manière particulièrement préférée de 70 à 95 % en poids,
- des particules de polystyrène, en particulier dans des quantités de 0,01 à 10 % en poids, de préférence de 0,05 à 5 % en poids, de manière particulièrement préférée de 1,0 à 2,0 % en poids, et
- des microsphères creuses synthétiques formées à base de polymères organiques, en particulier dans des quantités allant de 0,01 à 50 % en poids, de préférence de 0,05 à 15 % en poids, de manière particulièrement préférée de 0,1 à 5 % en poids,
et
• le composant (B) contenant à chaque fois dans un rapport quantitatif au composant (A),
- au moins un liant minéral, de préférence du ciment, en particulier dans des quantités allant de 0,01 à 95 % en poids, de préférence de 5 à 60 % en poids, de manière particulièrement préférée de 10 à 55 % en poids, et
- des particules de caoutchouc naturel vulcanisé, de caoutchouc synthétique vulcanisé, de caoutchouc thermoplastique ou de mélanges de ceux-ci, en particulier dans des quantités allant de 0,01 à 90 % en poids, de préférence 1 à 60 % en poids, de manière particulièrement préférée de 5 à 30 % en poids, et de manière tout particulièrement préférée de 10 à 25 % en poids.

14. Utilisation d'une composition de matériau de construction selon l'une des revendications 1 à 13 pour l'imperméabilisation de bâtiments, en particulier pour l'étanchement et/ou la protection de bâtiments ou de pièces de construction en contact avec la terre ou de toits.

15. Procédé d'étanchement et/ou de protection de bâtiments ou pièces de construction, **caractérisé en ce qu'**une composition de matériau de construction selon l'une des revendications 1 à 13 est appliquée sur les bâtiments ou pièces de construction concernés avec une épaisseur de revêtement à l'état humide allant de 0,1 à 10 mm, en particulier de 1 à 5 mm, de préférence de 2 à 4,5 mm, puis est laissée à sécher et à durcir.
